(19) 

Europäisches
Patentamt
European
Patent Office
Office européen
des brevets

(11) **EP 4 572 379 A1**

(12) **EUROPEAN PATENT APPLICATION**
published in accordance with Art. 153(4) EPC

(43) Date of publication:
**18.06.2025  Bulletin 2025/25**

(21) Application number: **23858961.8**

(22) Date of filing: **18.07.2023**

(51) International Patent Classification (IPC):
***H04W 24/08*** (2009.01)

(52) Cooperative Patent Classification (CPC):
**H04W 24/08; H04W 72/23**

(86) International application number:
**PCT/CN2023/107929**

(87) International publication number:
**WO 2024/045925 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **31.08.2022  CN 202211054429**

(71) Applicant: **Huawei Technologies Co., Ltd.
Shenzhen, Guangdong 518129 (CN)**

(72) Inventors:
• **WANG, Hui
  Shenzhen, Guangdong 518129 (CN)**

• **LIAO, Shuri
  Shenzhen, Guangdong 518129 (CN)**
• **DOU, Shengyue
  Shenzhen, Guangdong 518129 (CN)**
• **HU, Xingxing
  Shenzhen, Guangdong 518129 (CN)**
• **ZHANG, Jiayin
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **SATELLITE COMMUNICATION METHOD AND APPARATUS**

(57)  A satellite communication method and an apparatus are provided. The method includes: A network device determines one system information SI window, where the SI window includes Nw subwindows; and sends a broadcast message. Correspondingly, a terminal device receives the broadcast message. The broadcast message includes indication information, the indication information indicates that the SI window includes the Nw subwindows, each subwindow corresponds to one SI message, and at least one of the Nw SI messages includes ephemeris information. The terminal device monitors the Nw SI messages based on the broadcast message. According to embodiments of this application, monitoring efficiency can be effectively improved.

FIG. 4

**EP 4 572 379 A1**

**Description**

This application claims priority to Chinese Patent Application No. 202211054429.X, filed with the China National Intellectual Property Administration on August 31, 2022 and entitled "SATELLITE COMMUNICATION METHOD AND APPARATUS", which is incorporated herein by reference in its entirety.

**TECHNICAL FIELD**

This application relates to the field of communication technologies, and in particular, to a satellite communication method and an apparatus.

**BACKGROUND**

An ephemeris (which may also be referred to as ephemeris information) of a satellite is information like a location data list of an artificial satellite at each moment, and is usually used in a global positioning system (global positioning system, GPS). For example, to calculate a location of a point from GPS observations, three-dimensional coordinates of the satellite at an observation moment need to be learned of, and the observation moment is reference time of the ephemeris. The ephemeris of the satellite provides an orbit parameter, and the ephemeris may be used to determine coordinates of the satellite. In satellite communication, because a satellite is far away from the ground, and an air interface delay is large, a terminal device needs to accurately learn of a location of the satellite at each moment to calculate a timing advance in advance, to ensure that an uplink and downlink synchronization process of an initial access process is smoothly performed. In addition, a delay jitter and a large Doppler frequency offset caused by a high moving speed of a low earth orbit (low earth orbit, LEO) satellite greatly affect communication quality. The satellite needs to send orbit information and location information of the satellite to a user, so that a ground terminal can accurately correct a time-frequency offset.

Currently, a method for obtaining ephemeris information by a terminal device may be as follows: The terminal device first obtains, via a system information block (system information block, SIB) 1, a system information (system information, SI) message that may be received by the terminal device, a time domain position and a length that are of an SI window corresponding to the SI message, and an SIB corresponding to the SI message; and based on the foregoing information, the terminal device performs blind detection on the SI message and the SIB corresponding to the SI message in the SI window, to obtain the ephemeris information based on the SIB.

However, in the foregoing method, monitoring efficiency of the terminal device is low.

**SUMMARY**

Embodiments of this application provide a satellite communication method and an apparatus, to effectively improve monitoring efficiency of a terminal device.

According to a first aspect, an embodiment of this application provides a satellite communication method, where the method includes:

receiving a broadcast message, where the broadcast message includes indication information, the indication information indicates that one system information (system information, SI) window includes Nw subwindows, each of the Nw subwindows corresponds to one SI message, at least one of the Nw SI messages includes ephemeris information, and Nw is an integer greater than or equal to 2; and monitoring the Nw SI messages based on the broadcast message.

Generally, one SI window corresponds to one SI message. In a non-terrestrial network (non-terrestrial network, NTN) communication system, an SI window is usually large. Therefore, when one SI window corresponds to one SI message, monitoring overheads of a terminal device are affected. As a result, the terminal device monitors one SI message in a large SI window. This not only wastes the monitoring overheads of the terminal device, but also leads to low monitoring efficiency.

In this embodiment of this application, the SI window is divided into the Nw subwindows, and each subwindow corresponds to the SI message. Therefore, the terminal device may obtain SIB19 from the at least one SI message, and a length of a subwindow corresponding to the SI message is less than that of the SI window. In this way, the monitoring efficiency of the terminal device can be effectively improved, and efficiency of obtaining SIB19 through monitoring can be improved. Optionally, each subwindow corresponds to the SI message, so that the SI window may include a plurality of SI messages. For example, the plurality of SI messages may correspond to different types of SIBs, thereby improving configuration flexibility.

In a possible implementation, a monitoring occasion (monitoring occasion, MO) in each subwindow corresponds to a group of MOs in every M system frames (system frame, SF) in the SI window, and M is an integer greater than or equal to 2.

In a possible implementation, the every M SFs include a first group of MOs, and the first group of MOs meet at least one of the following conditions: MOs in the first group of MOs correspond to a same SF, and MOs in the first group of MOs correspond to at least two SFs.

In a possible implementation, the first group of MOs include an MO that is in an even-index SF and that corresponds to SIB19.

In this embodiment of this application, MOs that are in the even-index SF and that correspond to SIB19 are divided into one group, so that all MOs in a subwindow corresponding to the group may be MOs for sending SIB19 by a network device. This ensures that UE can quickly obtain SIB19 through monitoring. In addition, because each MO in the group corresponds to SIB19, the monitoring efficiency is effectively improved, and monitoring resources can be further saved.

In a possible implementation, MO indexes in each subwindow are determined by extracting a group of MOs from the every M SFs in the SI window and numbering the group of MOs in ascending order.

In this embodiment of this application, the MOs in the SI window are extracted, and then arranged in ascending order of numbers, so that the UE can obtain, according to a specific formula, SIB19 corresponding to a synchronization signal block (synchronization signal block, SSB) received by the UE.

In a possible implementation, the method further includes: receiving a synchronization signal block SSB. An index of the SSB is K, and an MO index i that is in the subwindow and that corresponds to the SSB satisfies the following condition:

$$i=x*N+K,$$

where
x=0, 1, ..., and X-1, X=ceil(S/N), S represents a total quantity of MOs in the subwindow, and N represents a total quantity of SSBs in the SI window.

In a possible implementation, a periodicity of the SSB is equal to a window length of the SI window.

In this embodiment of this application, the periodicity of the SSB is equal to the window length of the SI window, thereby effectively reducing a waste of the monitoring resources caused when the periodicity of the SSB is not equal to the window length of the SI window. In this embodiment of this application, the SI window includes a plurality of subwindows, and each subwindow may correspond to the SI message, so that the SI window may include the plurality of SI messages. For example, the plurality of SI messages may correspond to different types of SIBs, thereby improving the configuration flexibility.

In a possible implementation, a value of M is determined based on an SSB pattern.

In a possible implementation, the broadcast message further includes at least one piece of the following information: a time-frequency resource of the SI window, an index of the SI message corresponding to each of the Nw subwindows, and a system information block SIB corresponding to each SI message.

In a possible implementation, the broadcast message further includes at least one piece of the following information: an offset that is of each group of MOs in the every M SFs and that is relative to a start location of the every M SFs, a window length of each group of MOs in the every M SFs, and the value of M (which may also be referred to as a periodicity of each group of MOs).

According to a second aspect, an embodiment of this application provides a satellite communication method, where the method includes:
determining one system information SI window, where the SI window includes Nw subwindows; and sending a broadcast message, where the broadcast message includes indication information, the indication information indicates that the SI window includes the Nw subwindows, each of the Nw subwindows corresponds to one SI message, at least one of the Nw SI messages includes ephemeris information, and Nw is an integer greater than or equal to 2.

In a possible implementation, an MO in each subwindow corresponds to a group of MOs in every M system frames SF in the SI window, and M is an integer greater than or equal to 2.

In a possible implementation, the every M SFs include a first group of MOs, and the first group of MOs meet at least one of the following conditions: MOs in the first group of MOs correspond to a same SF, and MOs in the first group of MOs correspond to at least two SFs.

In a possible implementation, the first group of MOs include an MO that is in an even-index SF and that corresponds to SIB 19.

In a possible implementation, MO indexes in each subwindow are determined by extracting a group of MOs from the every M SFs in the SI window and numbering the group of MOs in ascending order.

In a possible implementation, the method further includes: sending a synchronization signal block SSB. An index of the SSB is K, and an MO index i that is in the subwindow and that corresponds to the SSB satisfies the following condition:

$$i=x*N+K,$$

where
x=0, 1, ..., and X-1, X=ceil(S/N), S represents a total quantity of MOs in the subwindow, and N represents a total quantity of SSBs in the SI window.

In a possible implementation, a periodicity of the SSB is equal to a window length of the SI window.

In a possible implementation, a value of M is determined based on an SSB pattern.

In a possible implementation, the broadcast message further includes at least one piece of the following information: a time-frequency resource of the SI window, an index of the SI message corresponding to each of the Nw subwindows, and a system information block SIB corresponding to each SI message.

In a possible implementation, the broadcast message further includes at least one piece of the following information: an offset that is of each group of MOs in the every M SFs and that is relative to a start location of the every M SFs, a window length of each group of MOs in the every M SFs, and the value of M (which may also be referred to as a periodicity of each group of MOs).

In a possible implementation, Nw is determined based on a total quantity of MOs in the SI window and the total quantity of synchronization signal blocks SSB in the SI window.

In a possible implementation, Nw is less than or equal to Nmax, and Nmax satisfies the following condition:

$$Nmax = \lfloor S_{MO}/N \rfloor,$$

where $S_{MO}$ represents the total quantity of MOs in the SI window, and N represents the total quantity of synchronization signal blocks SSB in the SI window.

According to a third aspect, an embodiment of this application provides a communication apparatus, configured to perform the method according to any one of the first aspect or the possible implementations of the first aspect. The communication apparatus includes units that perform the method according to any one of the first aspect or the possible implementations of the first aspect. For example, the communication apparatus may include a processing unit and a transceiver unit.

According to a fourth aspect, an embodiment of this application provides a communication apparatus, configured to perform the method according to any one of the second aspect or the possible implementations of the second aspect. The communication apparatus includes units that perform the method according to any one of the second aspect or the possible implementations of the second aspect. For example, the communication apparatus may include a processing unit and a transceiver unit.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may be further integrated into one component, that is, the processor and the memory may be further integrated together.

In a possible implementation, the communication apparatus further includes a transceiver. The transceiver is configured to receive a signal and/or send a signal.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may be further integrated into one component, that is, the processor and the memory may be further integrated together.

In a possible implementation, the communication apparatus further includes a transceiver. The transceiver is configured to receive a signal and/or send a signal.

According to a seventh aspect, an embodiment of this application provides a communication apparatus. The communication apparatus includes a logic circuit and an interface. The logic circuit is coupled to the interface, the interface is configured to input a broadcast message, and the logic circuit is configured to monitor Nw SI messages based on the broadcast message.

In a possible implementation, the interface is further configured to input an SSB.

According to an eighth aspect, an embodiment of this application provides a communication apparatus. The communication apparatus includes a logic circuit and an interface. The logic circuit is coupled to the interface, the logic circuit is configured to determine Nw subwindows included in one SI window, and the interface is configured to output a broadcast message.

In a possible implementation, the interface is further configured to output an SSB.

According to a ninth aspect, an embodiment of this application provides a computer-readable storage medium. The computer-readable storage medium is configured to store a computer program. When the computer program runs on a computer, the method according to any one of the first aspect or the possible implementations of the first aspect is enabled to be performed.

According to a tenth aspect, an embodiment of this application provides a computer-readable storage medium. The computer-readable storage medium is configured to store a computer program. When the computer program runs on a computer, the method according to any one of the second aspect or the possible implementations of the second aspect is enabled to be performed.

According to an eleventh aspect, an embodiment of this application provides a computer program product. The computer program product includes a computer program or computer code (or instructions). When the computer program product runs on a computer, the method according to any one of the first aspect or the possible implementations of the first aspect is enabled to be performed.

According to a twelfth aspect, an embodiment of this application provides a computer program product. The computer program product includes a computer program or computer code (or instructions). When the computer program product runs on a computer, the method according to any one of the second aspect or the possible implementations of the second aspect is enabled to be performed.

According to a thirteenth aspect, an embodiment of this application provides a computer program. When the computer program runs on a computer, the method according to any one of the first aspect or the possible implementations of the first aspect is performed.

According to a fourteenth aspect, an embodiment of this application provides a computer program. When the computer program runs on a computer, the method according to any one of the second aspect or the possible implementations of the second aspect is performed.

According to a fifteenth aspect, an embodiment of this application provides a communication system. The communication system includes a terminal device and a network device. The terminal device is configured to perform the method according to any one of the first aspect or the possible implementations of the first aspect. The network device is configured to perform the method according to any one of the second aspect or the possible implementations of the second aspect.

## BRIEF DESCRIPTION OF DRAWINGS

FIG. 1 is a diagram of a structure of a communication system according to an embodiment of this application;

FIG. 2a is a diagram of a satellite communication system in a transparent transmission scenario according to an embodiment of this application;

FIG. 2b is a diagram of a satellite communication system in a regeneration scenario according to an embodiment of this application;

FIG. 2c is a diagram of a satellite communication system in a regeneration scenario according to an embodiment of this application;

FIG. 3a is a diagram of an SSB pattern according to an embodiment of this application;

FIG. 3b is a diagram of search space of an SI message corresponding to an SSB according to an embodiment of this application;

FIG. 3c is a diagram of search space of an SI message corresponding to an SSB according to an embodiment of this application;

FIG. 4 is a schematic flowchart of a satellite communication method according to an embodiment of this application;

FIG. 5a is a diagram of a division manner of a subwindow according to an embodiment of this application;

FIG. 5b is a diagram of a division manner of a subwindow according to an embodiment of this application;

FIG. 6a is a diagram of a division manner of a subwindow according to an embodiment of this application;

FIG. 6b is a diagram of a division manner of a subwindow according to an embodiment of this application;

FIG. 6c is a diagram of a division manner of a subwindow according to an embodiment of this application;

FIG. 6d is a diagram of a division manner of a subwindow according to an embodiment of this application;

FIG. 7 is a diagram of a structure of a communication apparatus according to an embodiment of this application;

FIG. 8 is a diagram of a structure of a communication apparatus according to an embodiment of this application; and

FIG. 9 is a diagram of a structure of a communication apparatus according to an embodiment of this application.

## DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are merely intended to distinguish between different objects but do not indicate a particular order. In addition, the terms "including", "having", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. A person skilled in the art may understand, in explicit and implicit manners, that an embodiment described in this application may be combined with another embodiment.

In this application, "at least one (item)" means one or more, "a plurality of" means two or more, and "at least two (items)" means two or more than three (including three). The term "and/or" is used to describe an association relationship for describing associated objects and represents that three relationships may exist. For example, "A and/or B" may represent the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. A character "/" usually indicates an "or" relationship between the associated objects. "At least one of the following items (pieces)" or a similar expression thereof refers to any combination of these items. For example, at least one (piece) of a, b, or c may represent: a, b, c, "a and b", "a and c", "b and c", or "a, b, and c".

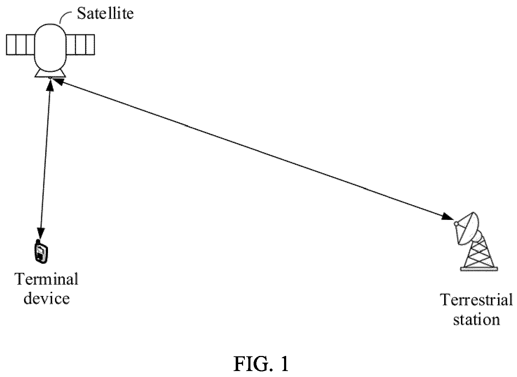

The method provided in embodiments of this application may be applied to a non-terrestrial network (non-terrestrial network, NTN) communication system. As shown in FIG. 1, the communication system may include a terminal device, a satellite (which may also be referred to as a satellite base station), and a terrestrial station (which may also be referred to as a gateway (gateway) or a gateway station). It may be understood that FIG. 1 shows only one satellite and one terrestrial station. In actual use, an architecture with a plurality of satellites and/or a plurality of terrestrial stations may be used as required. Each satellite may provide a service for one or more terminal devices, each satellite may correspond to one or more terrestrial stations, each terrestrial station may correspond to one or more satellites, or the like. This is not specifically limited in embodiments of this application.

A terminal device in embodiments of this application is an apparatus with a wireless transceiver function. The terminal device may communicate with an access network device (or may be referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor, outdoor, handheld, or vehicle-mounted device; or may be deployed on the water (for example, a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5th-generation (5th-generation, 5G) network or a future network, or the like that has a wireless communication function. This is not limited in embodiments of this application. For ease of description, the following uses UE as an example to describe the satellite communication method provided in embodiments of this application.

It may be understood that terminal devices shown in the embodiments of this application may further communicate with each other through device-to-device (device-to-device, D2D) communication, machine-to-machine (machine-to-machine, M2M) communication, or the like. The terminal device shown in embodiments of this application may alternatively be a device in the internet of things (internet of things, IoT). The IoT network may include, for example, the internet of vehicles. Communication modes in an internet of vehicles system are collectively referred to as vehicle-to-X (vehicle-to-X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

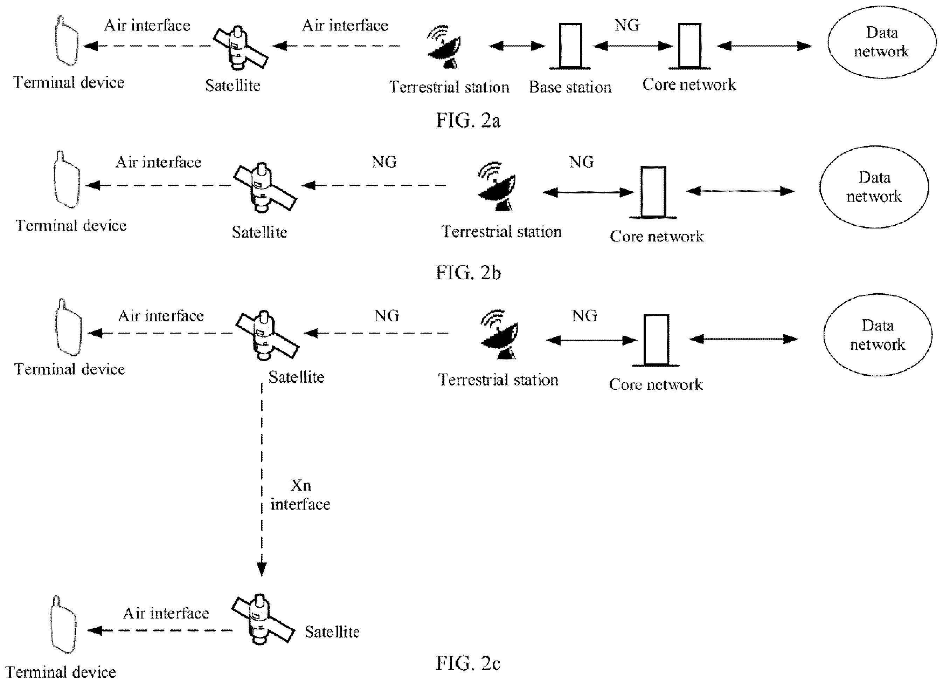

The terrestrial station in embodiments of this application may be configured to connect a satellite and a base station, or connect a satellite and a core network. The satellite in embodiments of this application may provide a wireless access service for the terminal device, schedule a radio resource for the accessed terminal device, and provide a reliable wireless transmission protocol, a reliable data encryption protocol, and the like. The satellite may use an artificial earth satellite, a high-altitude aircraft, and the like as base stations for wireless communication, for example, an evolved NodeB (evolved NodeB, eNB) and a next generation NodeB (next generation NodeB, gNB). Alternatively, the satellite may be used as a relay of these base stations to transparently transmit signals of these base stations to the terminal device. Therefore, in some implementations of this application, for example, in a satellite transparent transmission scenario, the network device may be a base station (which may also be referred to as a ground base station) shown in FIG. 1. FIG. 2a is a diagram of a satellite communication system in a transparent transmission scenario according to an embodiment of this application. For example, a terminal device may access a network through an air interface (the air interface may be various types of air interfaces, for example, a 5G air interface), and a network device may be deployed on a ground base station. A satellite is connected to a terrestrial station through a radio link. The terrestrial station and the ground base station are connected to a core network in a wired or wireless manner. There may be a radio link between satellites. In the system shown in FIG. 2a, the satellite may have a transparent transmission and forwarding function (that is, a corresponding network device is deployed on the ground), and transparent transmission and forwarding may be performed between satellites. In some other implementations of this application, for example, in a satellite regeneration scenario, the network device may be the satellite shown in FIG. 1. FIG. 2b is a diagram of a satellite communication system in a regeneration scenario according to an embodiment of this application. For example, the terminal device may access a network through an air interface (the air interface may be various types of air interfaces, for example, a 5G air interface). The network device may be deployed on a satellite (for example, a regeneration mode of the satellite). For example, a base station or some base station functions are deployed on the satellite, signaling exchange and user data transmission between base stations may be completed between satellites, as shown in FIG. 2c.

For example, network elements in FIG. 2a to FIG. 2c and interfaces of the network elements may be shown as follows.

The terminal device may access a satellite network through the air interface and initiate a service like a call or Internet access. The base station may be configured to provide a wireless access service, schedule a radio resource for the accessed terminal device, and provide a reliable wireless transmission protocol, a reliable data encryption protocol, and the like. The terrestrial station may be configured to forward signaling and service data between the satellite and a core network. The core network may be used for user access control, mobility management, session management, user security authentication, charging, or the like. The core network may include a plurality of functional units, for example, function entities including control planes and data planes. For example, the core network shown in FIG. 2a to FIG. 2c may include an access mobility management function (access and mobility management function, AMF), a session management function (session management function, SMF), a user plane function (user plane function, UPF), and the like. For example, the AMF may be configured to be responsible for user access management, security authentication, mobility management, and the like. The UPF may be configured to be responsible for managing user plane data transmission, traffic statistics collection, and the like. The air interface shown in FIG. 2a to FIG. 2c may be understood as a radio link between a terminal and the base station, or the radio link between the satellite and the terrestrial station. An Xn interface may be understood as an interface between base stations, and is mainly used for signaling interaction such as handover. An NG interface may be used as an interface between the base station and the core network, and is used to exchange signaling such as non-access stratum (non-access stratum, NAS) signaling of the core network and service data of a user.

It may be understood that in systems using different radio access technologies, names of devices having a base station function may be different, and are not shown one by one in embodiments of this application.

Optionally, the satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (none-geostationary earth orbit, NGEO), a high altitude platform station (high altitude platform station, HAPS), or the like. A specific type of the satellite is not limited in embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In an initial access process of a satellite communication system, to successfully complete uplink synchronization between a network device and UE in the initial access process, the network device needs to send ephemeris information to the UE while delivering a system information block (system information block, SIB) 1, so that the UE accurately estimates a moving track of a satellite within specific time, and calculates a timing advance based on the moving track of the satellite, to use the timing advance to offset impact of an air interface delay, and implement uplink and downlink synchronization between the satellite side and a UE side.

In a satellite communication process, the UE needs to first correctly decode a synchronization signal block (synchronization signal block, SSB), and then decode SIB1 based on related information in the SSB. The network device may notify, by using SIB1, the UE of SI messages, SIBs included in each SI message, an SI window in which the SI messages is sent, a time domain position and a length of the SI window, and the like, but does not notify the UE of subframes in which the SI message is scheduled in the SI window. Therefore, when the UE needs a SIB, the UE attempts to perform decoding on each monitoring occasion (monitoring occasions, MO) in an SI window corresponding to an SI message corresponding to the SIB, until the UE successfully receives the SI message, to obtain the SIB corresponding to the SI message.

It may be understood that the MO shown in embodiments of this application may be referred to as a monitoring occasion, a blind detection occasion, an MO of a PDCCH, an MO of a PDCCH scrambled based on an SI-RNTI, or the like. For specific descriptions of the MO, refer to a related protocol. Details are not described in embodiments of this application. Monitoring shown in embodiments of this application may also be referred to as blind detection, and monitoring and blind detection shown below may be replaced with each other. The window length of the SI window shown in embodiments of this application may also be referred to as a length of the SI window, or referred to as an SI window length for short.

Before the satellite communication method provided in embodiments of this application is described, the following describes terms in embodiments of this application.

1. SSB pattern (pattern)

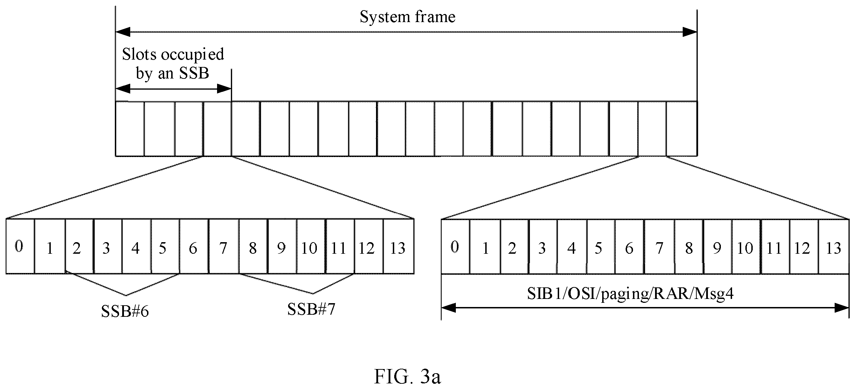

FIG. 3a is a diagram of an SSB pattern according to an embodiment of this application. When a subcarrier spacing is 30 kHz, a network device may send eight SSBs, such as SSB#0 to SSB#7, within first 2 ms of an even-index system frame (system frame, SF) (10 ms). FIG. 3a shows only an example of slots occupied by SSB#6 and SSB#7, and slots occupied by other SSBs are not shown one by one. SIB1 and SIBx that correspond to the SSB are alternately sent in last 8 ms of an even-index SN. SIB1 and SIBx that correspond to the SSB are alternately sent, to effectively ensure that the UE obtains the ephemeris information as soon as possible after receiving SIB1, so as to complete the uplink synchronization procedure. It may be understood that, in last 8 ms of an odd-index SF, the network device may be configured to send a downlink message, for example, at least one of SIB1, other system information (other system information, OSI), a paging (paging) message, a random access response (random access response, RAR), and message4 (message 4, Msg4). For example, SIBx may include SIB19 or SIB2. This is not limited in embodiments of this application. For ease of description, the following describes the satellite communication method provided in embodiments of this application by using an example in which ephemeris information is included in SIB19.

It may be understood that both the even-index SF and the odd-index SF in the method shown in embodiments of this application are shown by using an example in which an index of a first SF in an SI window is 0. If the index of the first SF in the SI window is 1, in embodiments of this application, the even-index SF may be replaced with the odd-index SF, and the odd-index SF may be replaced with the even-index SF.

It should be noted that the foregoing SSB pattern is shown by using an example in which the subcarrier spacing is 30 kHz, but should not be construed as a limitation on embodiments of this application. In other words, as the subcarrier spacing changes, embodiments of this application are applicable to SSB patterns corresponding to different subcarrier spacings. For example, when the subcarrier spacing is 60 kHz, one system frame may include 40 slots, first four slots in the 40 slots may correspond to eight SSBs, and remaining slots in the 40 slots may be used to alternately send SIB1, SIB19, and the like. For ease of description, the following uses an example in which the subcarrier spacing is 30 kHz for description.

It should be noted that the foregoing is shown by using an example in which the first four slots in the system frame correspond to eight SSBs. The SSB pattern may alternatively be in another form. For example, first two slots in the system frame correspond to four SSBs, remaining slots in the system frame may be used to alternately send SIB1, SIB19, and the like. A form of the SSB pattern is not uniquely limited in embodiments of this application.

2. Search space (search space, SS) of SIBx

In 5G NR, there are two types of search space: UE-specific search space and common search space. The UE-specific search space is specifically used by UE (each UE may be different), and is configured based on a radio resource control (radio resource control, RRC) message. The UE can obtain information related to the UE-specific search space only after an RRC connection is established. The common search space is search space (for example, a PDCCH of an SIB) in which each UE needs to perform blind detection, or signaling (for example, a PDCCH corresponding to an RACH) that is applicable to each UE before a dedicated connection of each UE is established. For example, in a random access process, the UE needs to monitor a PDCCH used to receive SIB 1 and some other PDCCHs (DCI) (for example, DCI information of Msg2/Msg4).

For an NTN, ephemeris information may be included in SIB19, that is, the UE needs to monitor a PDCCH of SIB 19 to obtain the ephemeris information. The UE may obtain, according to the following formula (1), an MO of a PDCCH of SIB19 corresponding to the SSB:

$$j = x*N + K \ (1),$$

where
j represents the MO that is of the PDCCH and that is obtained by the UE, x=0, 1, ..., and X-1, X=ceil(a total quantity of MOs of the PDCCH in an SI window/N), N represents a total quantity of SSBs in the SI window, and K represents an index that is of an SSB and that is received by the UE.

The UE may learn of, from SIB1, the total quantity of MOs of the PDCCH in the SI window and the total quantity of SSBs in the SI window. In addition, the UE may obtain the index of the SSB based on the SSB received by the UE.

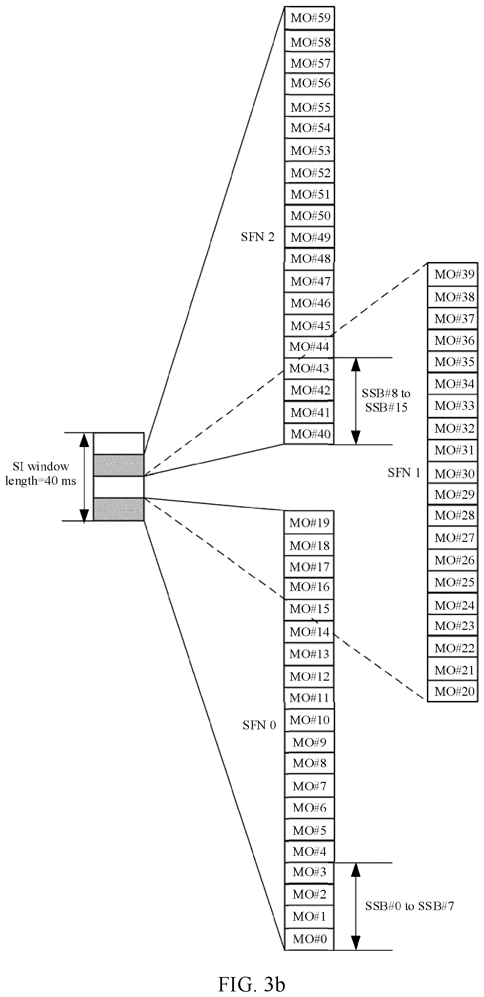

For example, an SI window length is equal to 80 slots (corresponding to 40 ms), a total quantity $S_{MO}$ of available MOs of the PDCCH in the SI window is equal to 80, and the total quantity N of SSBs in the SI window is equal to 16. In this case, X=5. It is assumed that K=0. MOs that are of a PDCCH of SIBx corresponding to SSB#0 and that are obtained by the UE according to the formula (1) are sequentially MO#0, MO#16, MO#32, MO#48, and MO#64. It is assumed that K=8. MOs that are of a PDCCH of SIBx corresponding to SSB#8 and that are obtained by the UE according to the formula (1) are sequentially MO#8, MO#24, MO#40, MO#56, and MO#72. FIG. 3b is a diagram of search space of an SI message corresponding to an SSB according to an embodiment of this application. A system frame number (system frame number, SFN) 1, an SFN 3, an SFN 5, and an SFN 7 shown in FIG. 3b may be understood as that the network device sends at least one of the following in these SFNs: OSI, a paging message, a RAR, and Msg4. In other words, the network device may send at least one of the OSI, the paging message, the RAR, and Msg4 via a blank frame shown in FIG. 3b. It may be understood that, that every two system frames shown in FIG. 3b include one blank frame is merely an example. For example, the satellite communication method provided in embodiments of this application may be further applicable to a case in which every three system frames include two blank frames. Examples are not enumerated one by one herein.

The UE performs blind detection, at MO#0, MO#16, MO#32, MO#48, and MO#64 in the SI window, on SIBx corresponding to SSB#0. However, for the network device, a sending location of SIBx corresponding to SSB#0 is slot#5 (for example, MO#5 in FIG. 3b) in the SI window. As a result, an MO that is of a PDCCH of SIBx and that is obtained by the UE does not match an SSB pattern. The UE performs blind detection, at MO#8, MO#24, MO#40, MO#56, and MO#72 in the SI window, on SIBx corresponding to SSB#8. However, it can be learned from the SSB pattern that the network device sends SSB#8 in the SFN 2, and MO#8 and MO#24 are respectively located in the SFN 0 and the SFN 1. As a result, the UE cannot obtain, through monitoring at MO#8 and MO#24, SIBx corresponding to SSB#8. It can be learned from the SSB pattern that a sending location of SIBx corresponding to SSB#8 is at MO#45 in the SFN 2. As a result, an MO that is of a PDCCH of SIBx and that is obtained by the UE does not match the SSB pattern. The foregoing problem that the MO of the PDCCH of SIBx does not match the SSB pattern not only causes a waste of blind detection resources, but also causes the UE to fail to obtain SIBx through blind detection. As a result, an initial access delay of the UE is increased.

According to the method provided in embodiments of this application, one SI window includes a plurality of subwindows, and each subwindow may correspond to one SI message. Therefore, on the basis that the UE can obtain the SI message through monitoring, monitoring efficiency is effectively improved, and the initial access delay of the UE is reduced. Optionally, because at least one of the plurality of subwindows corresponds to SIB19, and each MO in the subwindow corresponding to the SIB19 corresponds to a location at which the network device actually sends SIB19, blind detection resources can be further effectively saved, and the initial access delay of the UE can be reduced.

3. A periodicity of the SSB and the SI window length

Generally, the network device may indicate the SI window length by using an SI window length (si-WindowLength) field in a system information block type 1 (SystemInformationBlockType1) in SIB1. A scheduling information list (schedulingInfoList) in the system information block type 1 may indicate a list of SI messages, and a sequence of the SI messages in the list may be represented by n (starting from 1). For example, it is assumed that four SI messages are specified in the scheduling information list, four consecutive SI windows are used to send the four SI messages, and n indicates an SI window in which the SI message is located. The UE can perform blind detection on the SI message only in a corresponding SI window.

A start frame of the SI window satisfies SFN% T=floor(xIN), where T is a corresponding SI periodicity and is specified by si-Periodicity; and a start slot of the SI window is #a, where a=x%N. Herein, x determines the start frame and the start slot of the SI window in the SI periodicity, SFN%T ensures that the SI window appears only once in the SI periodicity, and x=(n-1)*w ensures that SI windows are close to each other and do not overlap, and there is no gap between the SI windows.

The following uses an example to describe a problem caused when the SI window length is different from a periodicity of the SSB.

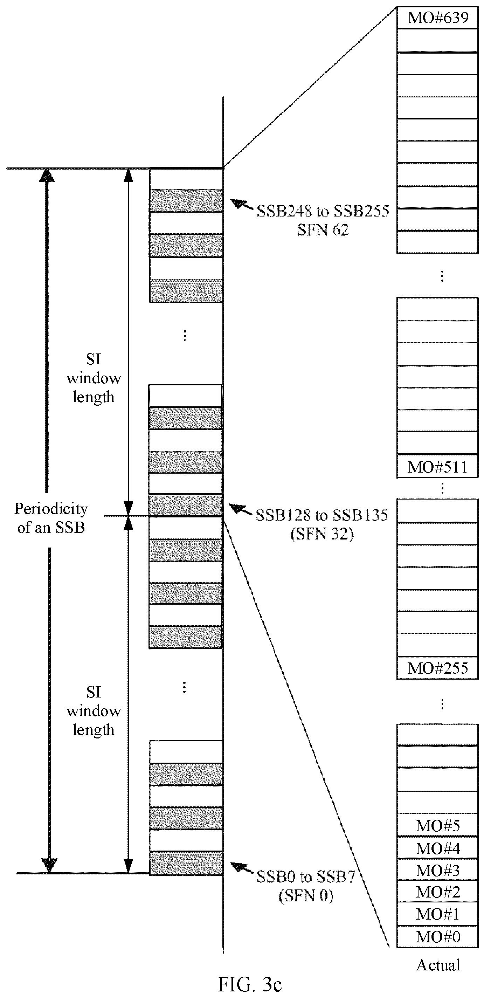

FIG. 3c is a diagram of search space of an SI message corresponding to an SSB according to an embodiment of this application. As shown in FIG. 3c, N=256, a periodicity of the SSB=640 ms, an SI window length=320 ms, a quantity of MOs of a PDCCH of an SI window=640, and X=ceil(640/256)=3. According to a mapping rule between the SSB and the MO of the PDCCH of the SI shown in FIG. 3b, once the SI window length is different from the periodicity of the SSB, the following problem occurs: 1. MO#0 to MO#255 in a first SI window correspond to SSB#0 to SSB#255, but SSB#128 to SSB#255 have not been sent; and 2. MO#0 to MO#255 in a second SI window still correspond to SSB#0 to SSB#255, and as a result, blind detection resources are severely wasted. Therefore, in the current SSB pattern, only one SI message can be configured in one periodicity of the SSB. In addition, the SI message includes all types of SIBs, and configuration is not flexible.

In the method provided in embodiments of this application, the window length of the SI window may be the same as the periodicity of the SSB. According to the method provided in embodiments of this application, the SI window includes a plurality of subwindows, and each subwindow may correspond to the SI message, so that the SI window may include the plurality of SI messages. For example, the plurality of SI messages may correspond to different types of SIBs, thereby improving the configuration flexibility. In each SI window, the UE may perform blind detection on a corresponding SI message. This effectively ensures that SIB19 corresponding to each SSB in the initial access process can be obtained through blind detection by the UE, and improves monitoring efficiency of the UE.

Embodiments of this application provide a satellite communication method and an apparatus, to effectively resolve a problem that the MO of the PDCCH of SIB19 does not match the SSB pattern. In embodiments of this application, the SI window may include a plurality of subwindows, and each subwindow may correspond to the SI message. Therefore, the subwindow corresponding to each SI message is less than the SI window, thereby effectively improving monitoring efficiency. The UE may perform blind detection on a plurality of SI messages in one SI window. In this way, blind detection of the SI messages can be flexible, and a quantity of times of blind detection performed by the UE on SIB19 can be reduced as much as possible.

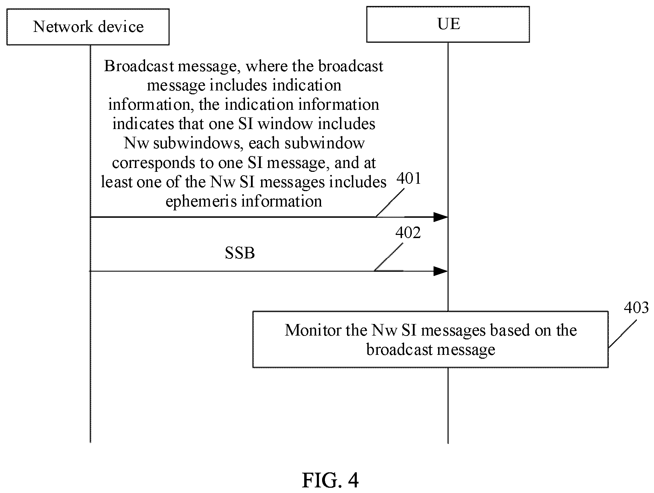

FIG. 4 is a schematic flowchart of a satellite communication method according to an embodiment of this application. The method may be applied to the communication system shown in FIG. 1 or the communication systems shown in FIG. 2a to FIG. 2c. As shown in FIG. 4, the method includes the following steps.

401: A network device sends a broadcast message. Correspondingly, UE receives the broadcast message, where the broadcast message includes indication information, the indication information indicates that one SI window includes Nw subwindows, each subwindow corresponds to one SI message, and at least one of the Nw SI messages includes ephemeris information.

Nw is an integer greater than or equal to 2. For example, the broadcast message may include SIB1. For example, the indication information may be included in an information configuration (configcommon) field in SIB1. It may be understood that the subwindow shown in embodiments of this application may be understood as a virtual window, an SI subwindow, or the like. A specific name of the subwindow is not limited in embodiments of this application. For example, a periodicity of the SI window (SI-periodicity) may be any one of the following: {80, 160, 320, 640, 1280, 2560, 5120} ms. For example, a window length of the SI window (SI-windowlength) may be any one of the following: {5, 10, 20, 40, 80, 160, 320, 640, 1280} slots. Optionally, to ensure that the UE can continuously obtain the ephemeris information, the length of the SI window may be equal to the periodicity of the SI window.

That at least one of the Nw SI messages includes ephemeris information may be understood as that the at least one of the Nw SI messages corresponds to SIB19 (that is, the UE may obtain SIB19 from the at least one SI message through monitoring). In addition, SIB19 may include the ephemeris information.

It may be understood that the ephemeris information shown in embodiments of this application is merely an example, and any information that the UE needs to obtain from the SIB falls within the protection scope of embodiments of this application. For example, at least one of the Nw SI messages corresponds to SIB2 (or SIB4), and SIB2 (or SIB4) may include cell handover information. Therefore, when the UE needs to perform cell handover, the UE may monitor, from the at least one of the Nw subwindows, the SI message corresponding to SIB2, to obtain the cell handover information.

The indication information may indicate Nw, that is, the indication information may indicate a quantity of a plurality of subwindows obtained by dividing one SI window. In an example, the indication information may include Nw. For example, the network device may indicate Nw by using an index, or indicate Nw by using a bitmap. This is not limited in embodiments of this application. An implementation in which the indication information includes Nw is simple. In another example, the indication information may include an offset of Nw relative to a reference value. For example, when Nw=2 and the reference value is 1, the offset is Nw-reference value=1. For another example, when Nw=3 and the reference value is 2, the offset may be Nw-reference value=2. For another example, when Nw=3 and the reference value is 4, the offset may be Nw-reference value=1. The reference value may be set by the network device, for example, configured for the terminal device via an RRC message. Reference values may be defined in a protocol, and are not enumerated one by one. When a value of Nw is large, Nw is indicated by using an offset, so that signaling overheads can be effectively reduced.

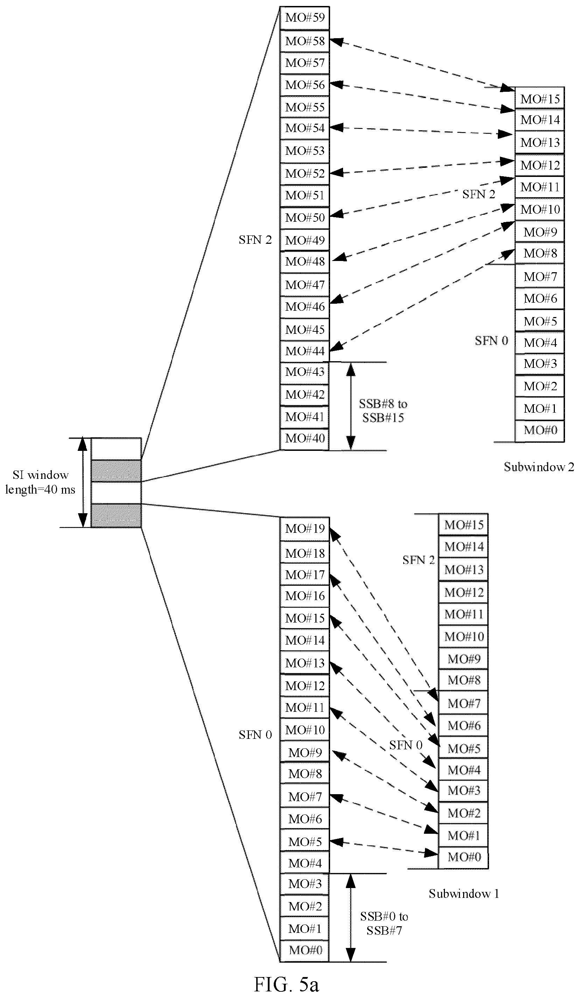

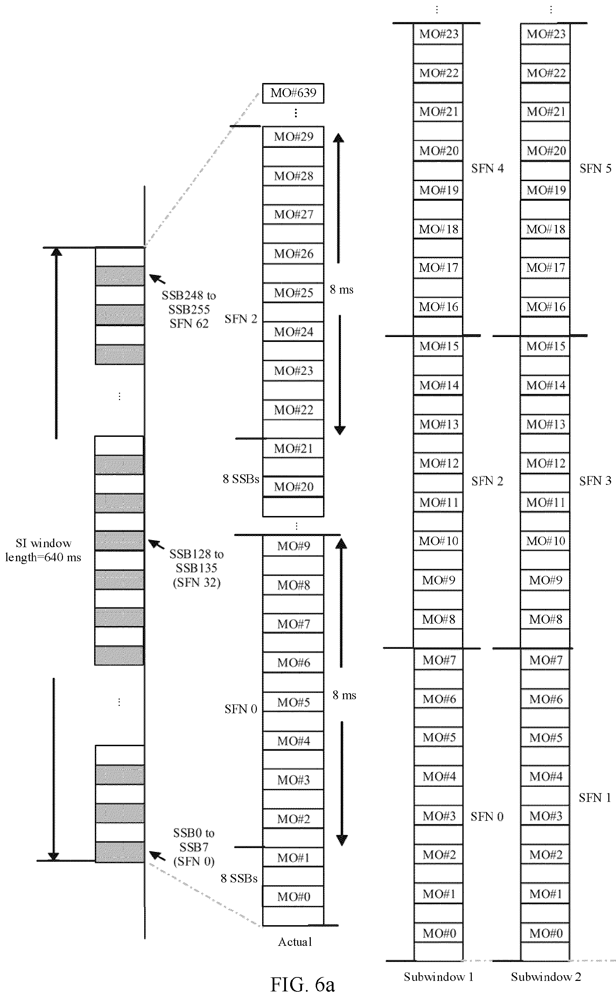

Optionally, the broadcast message further includes at least one piece of the following information: a time-frequency resource of the SI window, an index of the SI message corresponding to each subwindow, and an SIB corresponding to each SI message. The SIB shown herein may be understood as an SIB other than SIB1. For example, each subwindow may include one or more SIBs, other than SIB1, that have a same scheduling periodicity, that is, the SIBs included in each subwindow have the same scheduling periodicity. The broadcast message includes the time-frequency resource of the SI window, so that the terminal device can learn of the Nw subwindows on the corresponding time-frequency resource. The broadcast message includes the index of the SI message corresponding to each subwindow, so that the terminal device can learn which SI messages are included in each subwindow. The broadcast message includes the SIB corresponding to each SI message, so that the terminal device can learn which SIBs correspond to each SI message. Therefore, the terminal device accurately learns which SI message SIB19 is located in, and further learns of the ephemeris information. Optionally, the broadcast message may further include an arrangement manner of SS, and the arrangement manner of the SS may indicate a quantity of slots corresponding to one MO. For example, the broadcast message includes at least one of the following information: a periodicity of the MO and an offset of the MO. The periodicity of the MO indicates a start location of the MO relative to an SF. For example, in FIG. 5a, the periodicity of the MO may be that each slot corresponds to one MO, and the offset of the MO may be 0. For another example, in FIG. 6a, the periodicity of the MO may be that every two slots correspond to one MO, and the offset of the MO may be 0.5 ms. Based on the arrangement manner of the SS, the UE may effectively learn of the quantity of slots corresponding to one MO. For example, every two slots may correspond to one MO, or each slot may correspond to one MO. Examples are not enumerated one by one herein.

For example, one SI message may be associated with one subwindow. For example, a corresponding SI message may be sent in each subwindow (the SI message may be repeatedly sent for a plurality of times). For example, periodicities of different subwindows may be independent of each other, and different subwindows may not overlap. Generally, a quantity of times of sending an SI message in one subwindow or which slots the SI message is sent in may depend on implementation of the network device. According to the method provided in embodiments of this application, if the UE wants to obtain SIB19, the UE may monitor a corresponding SI message in a subwindow corresponding to SIB19. This reduces a waste of monitoring resources caused by the UE to monitor the SI message in an entire SI window. Certainly, if the UE wants to obtain another SIB, the UE may alternatively monitor a corresponding SI message in a subwindow corresponding to the SIB. SIB19 shown in embodiments of this application is merely an example, and should not be understood as a limitation on embodiments of this application.

A relationship between the SI window and the subwindow may be shown as follows:
An MO in each of the Nw subwindows corresponds to a group of MOs in every M SFs in the SI window, and M is an integer greater than or equal to 2.

In embodiments of this application, every M SFs may include Nw groups of MOs, and one of the Nw groups of MOs may correspond to one subwindow. In other words, each of the Nw groups of MOs corresponds to a different subwindow. Every M SFs group the MOs in a same manner. Because every M SFs group the MOs in the same manner, for ease of description, the following uses a manner of grouping the M SFs as an example for description, and a manner of grouping other SFs is deduced by analogy.

Every M SFs include a first group of MOs, and the first group of MOs may meet at least one of the following: MOs in the first group of MOs may correspond to a same SF, or MOs in the first group of MOs may correspond to at least two SFs. The first group of MOs shown herein are merely general descriptions, and do not have a specific meaning.

In embodiments of this application, the first group of MOs may include (for example, may include all or some) an MO that is in an even-index SF and that corresponds to SIB19. Optionally, the first group of MOs may further include an MO that is in an odd-index SF and that corresponds to SIB19. Optionally, the first group of MOs do not include an MO occupied by an SSB. A division manner of another group of MOs other than the first group of MOs is not limited in embodiments of this application.

In embodiments of this application, a value of M may be determined based on an SSB pattern. For example, every two SFs in one SI window include one SF used to send at least one of OSI, a paging message, an RAR, and Msg4, and one SF used to send the SSB. In this case, M=2. For another example, every three SFs in one SI window include two SFs used to send at least one of OSI, a paging message, an RAR, and Msg4, and one SF used to send the SSB. In this case, M=3. In other words, the value of M may be determined based on the SF used to send the SSB and the SF used to send at least one of the OSI, the paging message, the RAR, Msg4, and the like.

In an example, Nw=2, and one SI window may be divided into two subwindows. Optionally, when the two subwindows include a same quantity of MOs, one subwindow may include an MO that is in an even-index SF and that corresponds to SIB19, and the other subwindow may include a remaining MO in the even-index SF. The remaining MO may be understood as an MO that is in the even-index SF and that does not correspond to SIB19. Optionally, when the two subwindows include different quantities of MOs, one subwindow may include an MO that is in an even-index SF and that corresponds to SIB19, and the other subwindow may include another MO that does not correspond to SIB19, for example, include a remaining MO in the even-index SF and an MO in an odd-index SF. In another example, Nw=3, and one SI window may be divided into three subwindows. Optionally, the three subwindows may include a subwindow including an MO that is in an even-index SF and that corresponds to SIB19, and a subwindow including a remaining MO (an MO other than the MO corresponding to SIB19) in the even-index SF, and a subwindow including an MO in an odd-index SF. It may be understood that a division manner of another subwindow other than the subwindow corresponding to SIB19 is merely an example. In a specific implementation, the subwindow may alternatively be divided based on another SIB that the UE wants to obtain. For example, during cell handover, the UE needs to obtain SIB2 and SIB4. Therefore, when Nw=3, the three subwindows may further include: a subwindow including an MO that is in an even-index SF and that corresponds to SIB19, a subwindow including an MO corresponding to SIB2, and a subwindow including an MO corresponding to SIB4. A specific division manner of the subwindow is not limited in embodiments of this application.

It may be understood that, to ensure that the UE effectively obtains SIB19 through monitoring and save blind detection resources as much as possible, the subwindow including the MO that is in the even-index SF and that corresponds to SIB19 shown in embodiments of this application may not include the MO occupied by the SSB. Optionally, the subwindow shown in embodiments of this application may not include the MO occupied by the SSB.

Optionally, Nw is determined based on a total quantity of MOs that are in the SI window and that are of a PDCCH scrambled based on an SI-RNTI and a total quantity of SSBs in the SI window. Alternatively, it may be understood as that Nw is related to the total quantity of MOs that are in the SI window and that are of the PDCCH scrambled based on an SI-RNTI and the total quantity of SSBs in the SI window.

According to the foregoing formula (1), a quantity of MOs at which the UE may obtain SIB19 through blind detection in one SI window may be determined based on a total quantity of MOs of a PDCCH in the SI window and a total quantity of SSBs in the SI window. In embodiments of this application, in an example, if each subwindow may include an MO at which an SI message corresponding to the subwindow may be obtained through blind detection, or it may be understood as that if each SSB may correspond to one MO, Nw is less than or equal to Nmax, and Nmax meets the following condition:

$$Nmax=floor(S_{MO}/N) \quad (2)$$

Herein, $S_{MO}$ represents a total quantity of MOs that are in an SI window and that are of a PDCCH scrambled based on an SI-RNTI, and N represents a total quantity of SSBs in the SI window.

In another example, if there may be at least one subwindow in which no SI message may appear, a quantity of Nw may alternatively be greater than Nmax, or less than or equal to Nmax. Certainly, a specific value of Nw may be determined by the network device. The specific value of Nw is not limited in embodiments of this application.

In a possible implementation, the method shown in FIG. 4 further includes:
402: The network device sends the SSB, and correspondingly, the UE receives the SSB.

An index of the SSB is K, and an MO index i in the subwindow corresponding to the SSB satisfies the following condition:

$$i=x*N+K \quad (3),$$

where
x=0, 1, ..., and X-1, X=ceil(S/N), S represents a total quantity of MOs that are in the subwindow and that are of a PDCCH scrambled based on an SI-RNTI, and N represents a total quantity of SSBs in the SI window.

It may be understood that sequence numbers "401" and "402" shown in this embodiment of this application do not represent a sequence.

In this embodiment of this application, a periodicity of the SSB is equal to a window length of the SI window. For example, the SI window length=the periodicity of the SSB=80 slots, a total quantity $S_{MO}$ of MOs of an available PDCCH in the SI window is equal to 80, the total quantity N of SSBs in the SI window is equal to 16, and Nw=2. For example, FIG. 5a is a diagram of a division manner of a subwindow according to an embodiment of this application. As shown in FIG. 5a, two subwindows include a same quantity of MOs, the two subwindows are a subwindow 1 and a subwindow 2, and each of the subwindow 1 and the subwindow 2 includes 16 MOs. The subwindow 1 may correspond to an odd-index MO in an even-index SF in the SI window, and the subwindow 2 may correspond to an even-index MO in an even-index SF in the SI window. In FIG. 5a, neither the subwindow 1 nor the subwindow 2 includes MOs occupied by SSBs. A correspondence between the MO in the subwindow 1 and the MO in the SI window may be shown in FIG. 5a, and a correspondence between the MO in the subwindow 2 and the MO in the SI window may be shown in FIG. 5a. It may be understood that FIG. 5a shows only an example in which the subwindow 1 and the subwindow 2 correspond to one SF, and a case in which the subwindow 1 and the subwindow 2 correspond to another SF may be deduced by analogy.

According to the formula (3), X=ceil(16/16)=1, that is, x=0. When K=0, an MO index I that is in each subwindow and that corresponds to SSB#0 is equal to 0. In other words, the UE may separately perform blind detection, at MO#0 in the two subwindows, on an SI message corresponding to the subwindow 1 and an SI message corresponding to the subwindow 2. When K=8, an MO index i that is in each subwindow and that corresponds to SSB#8 is equal to 8. In other words, the UE may separately perform blind detection, at MO#8 in the two subwindows, on the SI message corresponding to the subwindow 1 and the SI message corresponding to the subwindow 2. MO#0 in the subwindow 1 is equivalent to MO#5 in an SFN 0 in the SI window, and MO#8 in the subwindow 1 is equivalent to MO#45 in an SFN 2 in the SI window. MO#0 in the subwindow 2 is equivalent to MO#4 in the SFN 0 in the SI window, and MO#8 in the subwindow 2 is equivalent to MO#44 in the SFN 2 in the SI window.

For the network device, a sending location of SIB19 corresponding to SSB#0 is slot#5 (for example, MO#5 in FIG. 5a) in the SI window. The network device sends SSB#8 in the SFN2. It can be learned from the method shown in FIG. 3b that, in FIG. 3b, there is a problem that the MO that is obtained by the UE and that is used to monitor SIB19 does not match a sending location of the network device. However, according to the method provided in embodiments of this application, when monitoring an SI message in a subwindow MO#0, the UE may obtain SIB19 corresponding to the SI message, to obtain the ephemeris information.

It can be learned from the method shown in FIG. 3b that, in FIG. 3b, there is a case in which the UE does not receive SSB#8, but needs to perform blind detection on SIB19 at MO#8 and MO#24 in the SI window. As a result, the UE cannot obtain, through monitoring, SIB19 corresponding to SSB#8, further causing a waste of blind detection resources. However, according to the method provided in embodiments of this application, when receiving SSB#8, the UE may monitor the SI message at MO#8 in the subwindow 1, to obtain the ephemeris information and SIB19 corresponding to the SI message. According to embodiments of this application, the UE may monitor SIB19 at the MO in the subwindow 1. This not only effectively reduces blind detection resources used when the UE performs blind detection on SIB19, but also ensures that the UE can obtain SIB19 through blind detection.

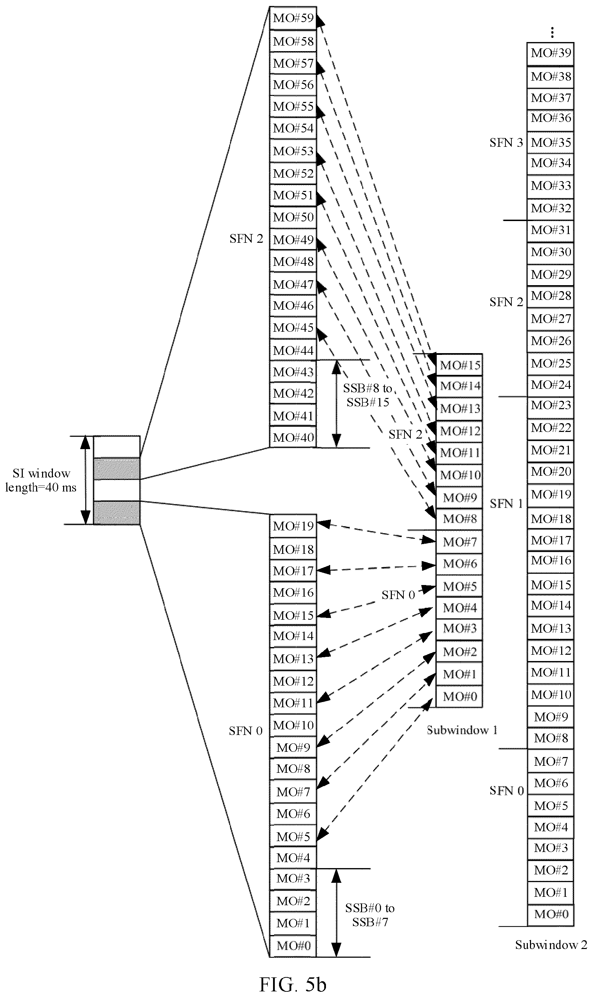

For another example, FIG. 5b is a diagram of a division manner of a subwindow according to an embodiment of this application. As shown in FIG. 5b, two subwindows include different quantities of MOs, the two subwindows are a subwindow 1 and a subwindow 2, and the subwindow 1 includes 16 MOs, and the subwindow 2 includes 48 MOs. The subwindow 1 may correspond to an odd-index MO in an even-index SF in the SI window, and does not include MOs occupied by SSBs. The subwindow 2 may correspond to an MO other than the MO corresponding to the subwindow 1 in the SI window (as shown in FIG. 5b). Alternatively, the subwindow 2 may correspond to an even-index MO in an even-index SF in the SI window and an odd-index SF in the SI window. The subwindow 2 does not include the MOs occupied by the SSBs. A specific manner of the MO included in the subwindow 2 is not limited in embodiments of this application. A correspondence between the MO in the subwindow 1 and the MO in the SI window may be shown in FIG. 5b.

According to the formula (3), for the subwindow 1, X=ceil(16/16)=1, that is, x=0. When K=0, an MO index i that is in the subwindow 1 and that corresponds to SSB#0 is equal to 0. In other words, the UE may perform blind detection, at MO#0 in the subwindow 1, on an SI message corresponding to the subwindow 1. When K=8, an MO index i that is in the subwindow 1 and that corresponds to SSB#8 is equal to 8. In other words, the UE may perform blind detection, at MO#8 in the subwindow 1, on the SI message corresponding to the subwindow 1. According to the formula (3), for the subwindow 2, X=ceil(48/16)=3, that is, x=0, 1, or 2. When K=0, an MO index i that is in the subwindow 1 and that corresponds to SSB#0 is equal to 0, 16, or 32. In other words, the UE may perform blind detection, at MO#0, MO#16, and MO#32 in the subwindow 2, on an SI message corresponding to the subwindow 2. When K=8, an MO index i that is in the subwindow 2 and that corresponds to SSB#8 is equal to 8, 24, or 40. In other words, the UE may perform blind detection, at MO#8, MO#24, and MO#40 in the subwindow 2, on the SI message corresponding to the subwindow 2.

It may be understood that this embodiment of this application is shown by using an example in which every M SFNs include Nw groups of MOs. However, this should not be construed as a limitation on this embodiment of this application. If every M SFNs include 2*Nw groups of MOs, two groups of MOs in every M SFNs may correspond to one subwindow, to achieve same effect as that of every M SFNs including Nw groups of MOs.

For a specific Nw, if there are a plurality of division manners of the subwindow, the network device may indicate a specific division manner of the subwindow of the UE by using a broadcast message. For example, the indication information may include Nw and a division manner of the subwindow corresponding to Nw.

Optionally, the division manner of the subwindow corresponding to Nw may be indicated in an index manner. For example, when Nw=2, there may be two division manners of the subwindow, and indexes of the two manners may be 0 and 1 in sequence. Therefore, the indication information may include Nw and the index 1 (or the index 0). Optionally, the division manner of the subwindow corresponding to Nw may be indicated in a bitmap manner. For example, when Nw=3, there are four division manners of the subwindow, and a length of a bitmap of the four division manners may be four bits. When a corresponding bit is 0, it may indicate that a corresponding division manner of the subwindow is not used; and when a corresponding bit is 1, it may indicate that a corresponding division manner of the subwindow is used. For example, if the bitmap is 0001, it indicates that when Nw=3, a first division manner of the subwindow may be used. It may be understood that, that the division manner of the subwindow is indicated by using the index or the bitmap herein may be understood as that the UE has obtained division manners of the subwindow with different Nw values in advance. It may be understood that an index may be further set for each division manner of the subwindow. Therefore, when Nw is fixed, the network device may indicate the index of the division manner of each subwindow to the UE, so that the UE learns of a specific division manner of the subwindow.

Optionally, the UE may not obtain the division manners of the subwindow with different Nw values in advance, and the network device may indicate the specific division manner to the UE in a broadcast message. Optionally, the broadcast message may include a division manner of at least one subwindow. For example, the broadcast message may further include at least one of the following: an offset that is of each group of MOs in the every M SFs and that is relative to a start location of the every M SFs, a window length of each group of MOs in the every M SFs, and the value of M (which may also be understood as a periodicity of each group of MOs). For example, for FIG. 5a, the broadcast message may include 2 (that is, the SI window is divided into two subwindows), an offset of a subwindow 1 relative to a start location of every two SFs, that is, five MOs (or 2.5 ms), an offset of a subwindow 2 relative to a start location of every two SFs, that is, four MOs (or 2 ms), a window length of the subwindow 1 in every M SFs, that is, 16 MOs (or 8 ms), a window length of the subwindow 2 in every M SFs, that is, 16 MOs (or 8 ms), and a periodicity of each group of MOs, that is, two SFs. Certainly, a quantity of two subwindows shown above may not be explicitly included in the broadcast message, but the quantity of subwindows is indicated by using quantities of different values of the offset or the window length. Other information that is not shown may be understood as that the UE has learned of the other information in advance. For example, MOs in the subwindow 1 and the subwindow 2 are from even-index SFs, and 16 MOs in the subwindow 1 respectively correspond to odd-index MOs of the SFN 0 and the SFN 2, and 16 MOs in the subwindow 2 respectively correspond to even-index MOs of the SFN 1 and the SFN 2. For another example, for FIG. 5b, the broadcast message may include 2 (that is, the SI window is divided into two subwindows), an offset of a subwindow 1 relative to a start location of every two SFs, that is, five MOs (or 2.5 ms), a window length of the subwindow 1 in every M SFs, that is, 16 MOs (or 8 ms), and a periodicity of each group of MOs, that is, two SFs. Optionally, a division manner of the subwindow 2 may be autonomously determined by the UE. Optionally, a division manner of the subwindow 2 may be included in the broadcast message. For example, the broadcast message may include: 2, the offset of the subwindow 1 relative to the start location of every two SFs, the window length of the subwindow 1, an offset (2 ms shown in FIG. 5b) of the subwindow 2 relative to a start location of an even-index SF, an offset (2 ms shown in FIG. 5b) of the subwindow 2 relative to a start location of an odd-index SF, and a window length (12 ms) of the subwindow 2 in every two SFs.

It may be understood that FIG. 5b is shown by using an example in which the subwindow 2 does not include first four MOs in an odd-index SF, but this should not be understood as a limitation on this embodiment of this application. For example, the subwindow 2 may include the first four MOs (which may also be understood as first four slots) in the odd-index SF. It may be understood that each group of MOs shown in embodiments of this application may also be referred to as a burst (burst) window, a burst window, or the like. A name of each group of MOs is not limited in embodiments of this application.

It may be understood that FIG. 5a and FIG. 5b are used as examples herein. Other values of Nw and division manners of the subwindow are also applicable, and are not enumerated one by one in embodiments of this application.

It may be understood that the division manner of the subwindow shown in embodiments of this application is applicable to the network device side, and is also applicable to the terminal device side. For example, for the network device, before the network device sends the broadcast message, the network device may determine an SI window, and the SI window includes Nw subwindows. For example, for a manner of determining the Nw subwindows included in the SI window, refer to the division manner of the subwindow shown in this embodiment of this application, for example, determining, based on an SSB pattern and a sending status of SIB19, a quantity of subwindows included in the SI window, that is, determining that the SI window includes Nw subwindows. For a manner in which the network device determines the Nw subwindows, refer to the descriptions of the division manner of the subwindow shown in this embodiment of this application.

403: The terminal device monitors the Nw SI messages based on the broadcast message.

For example, when Nw=2, the terminal device may monitor two SI messages in one SI window. For another example, when Nw=3, the terminal device may monitor three SI messages in one SI window. For another example, when Nw=4, the terminal device may monitor four SI messages in one SI window. Each SI message may correspond to one SIB, for example, SIB2, SIB3, or SIB19. Details are not described herein.

After monitoring the SI message in a corresponding subwindow, the UE may obtain SIB19 based on the SI message in the corresponding subwindow, to obtain the ephemeris information included in SIB19. Alternatively, the UE may obtain SIB2 based on the SI message in a corresponding subwindow, to obtain cell handover information and the like included in SIB2. Details are not enumerated one by one herein.

In this embodiment of this application, the SI window is divided into the Nw subwindows, and each subwindow corresponds to the SI message. Therefore, the terminal device may obtain SIB19 from the at least one SI message, and a length of a subwindow corresponding to the SI message is less than that of the SI window. In this way, the monitoring efficiency of the terminal device can be effectively improved, and efficiency of obtaining SIB19 through monitoring can be improved. Optionally, each subwindow corresponds to the SI message, so that the SI window may include a plurality of SI messages. For example, the plurality of SI messages may correspond to different types of SIBs, thereby improving configuration flexibility.

For detailed understanding of the Nw subwindows shown in embodiments of this application, the following uses examples for description.

Example 1

SI window length=periodicity of the SSB=SI periodicity=640 ms, $S_{MO}$=640, N=256, Nw=2 (which is merely an example), and indexes of SI messages corresponding to subwindows are sequentially 2 and 4. Each of the subwindow 1 and the subwindow 2 includes 256 MOs ($\frac{640}{2} - 64$), that is, S=256, X=ceil(256/256)=1, and x=0. As shown in FIG. 6a, the MOs in the subwindow 1 correspond to MOs in an even-index SF in the SI window length, and do not include MOs occupied by SSBs (which may also be understood as MOs corresponding to slots occupied by the SSBs). In addition, indexes of the MOs in the subwindow 1 are arranged in ascending order (which may also be understood as that the indexes of the MOs in the subwindow 1 are obtained through renumbering in ascending order). The MOs in the subwindow 2 may correspond to MOs in an odd-index SF in the SI window length, do not include MOs corresponding to first four slots in the odd-index SF, and indexes of the MOs in the subwindow 2 are arranged in ascending order (which may also be understood as that the indexes of the MOs in the subwindow 2 are obtained through renumbering in ascending order). Optionally, when a quantity of MOs included in the subwindow 1 may be different from a quantity of MOs included in the subwindow 2, the subwindow 2 may further include the MOs corresponding to the first four slots in the odd-index SF.

For SSB#0, an actual location at which the network device sends SIB19 is MO#2. For SSB#8, an actual location at which the network device sends SIB19 is MO#22. For SSB#255, an actual location at which the network device sends SIB19 is MO#639.

For the formula (1), indexes of MOs that are of a PDCCH of SIB19 and that correspond to SSB#0 are sequentially MO#0, MO#256, and MO#512. Indexes of MOs that are of the PDCCH of SIB19 and that correspond to SSB#8 are sequentially MO#8, MO#264, and MO#520. Indexes of MOs that are of the PDCCH of SIB19 and that correspond to SSB#255 are sequentially MO#255 and MO#511. In other words, the UE needs to obtain SIB19 from the MOs based on the index of the SSB received by the UE. It can be learned from the formula (1) that when the UE receives SSB#0, the UE cannot obtain SIB19 through monitoring at MO#0, MO#256, and MO#512. When receiving SSB#8, the UE has not received SSB#8 at MO#8. As a result, blind detection resources are wasted, and SIB19 cannot be obtained through monitoring at MO#264 and MO#520. When the UE receives SSB#255, the UE cannot obtain SIB19 through monitoring at MO#255 and MO#511. It can be learned that, when the formula in terrestrial communication is applied to an NTN, the UE cannot obtain SIB19 through monitoring.

For the formula (3), the SI window is divided into two subwindows: the subwindow 1 and the subwindow 2. In this case, each subwindow may include 256 MOs. For each subwindow, the index of the MO that is of the PDCCH of SIB 19 and that corresponds to SSB#0 is MO#0. MO#0 in the subwindow 1 is equivalent to MO#2 in the SI window. In other words, MO#0 in the subwindow 1 is included in the actual location at which the network device sends SIB19. An index of an MO that is of the PDCCH of SIB19 and that corresponds to SSB#8 is MO#8, and MO#8 in the subwindow 1 is equivalent to MO#22 in the SI window. In other words, MO#8 in the subwindow 1 is included in the actual location at which the network device sends SIB19. An index of an MO that is of the PDCCH of SIB19 and that corresponds to SSB#255 is MO#255, MO#255 in the subwindow 1 is equivalent to MO#629 in the SI window, and MO#255 in the subwindow 1 is included in the actual location at which the network device sends SIB19. The UE may perform blind detection, from the subwindow 2, on an SIB (for example, SIB2 or SIB4) included in an SI message (for example, an SI4 message) corresponding to the subwindow 2. According to the method provided in embodiments of this application, it is ensured that the UE can perform blind detection on SIB19 at a corresponding MO after obtaining the SSB, and blind detection resources are saved as much as possible.

Optionally, when the UE does not obtain the division manners of the subwindow with different Nw values in advance, the broadcast message may include at least one of the following: the value of M; an offset of each group of MOs in every two SFs relative to a start location of every two SFs, for example, 2.5 ms and 2 ms; a window length of each group of MOs in every M SFs, for example, 8 ms and 8 ms; a time-frequency resource of the SI window; an index of an SI message corresponding to each subwindow; and an SIB corresponding to each SI message. Optionally, when the UE obtains the division manners of the subwindow with different Nw values in advance, the broadcast message may include at least one of the following: the SI window including two subwindows, indexes of division manners of the two subwindows, the time-frequency resource of the SI window, the index of the SI message corresponding to each subwindow, and the SIB corresponding to each SI message.

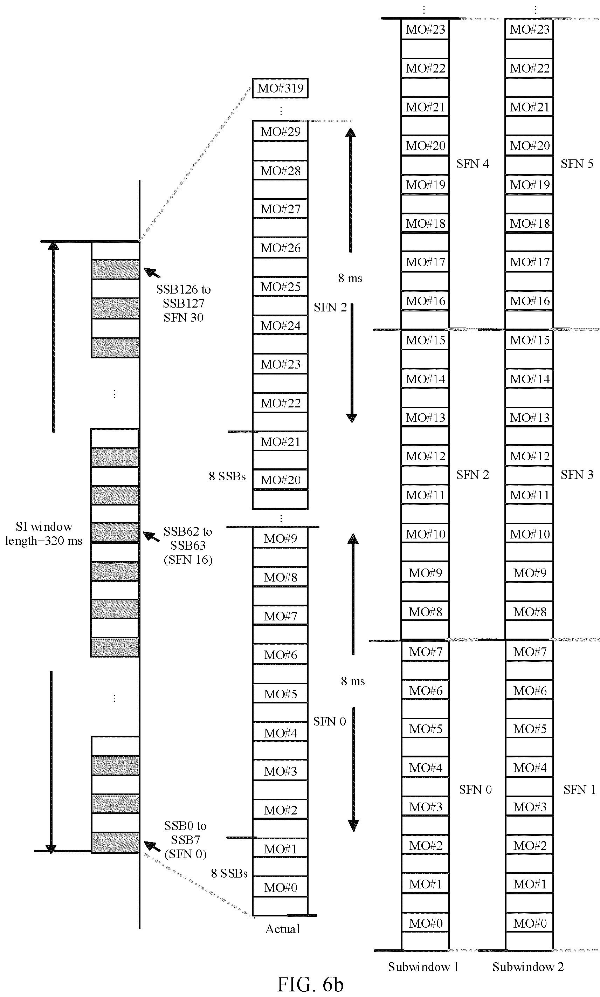

It may be understood that FIG. 6a is shown by using an example in which the SI window length is equal to 640 ms. As shown in FIG. 6b, related descriptions shown in FIG. 6a may also be applicable to a case in which the SI window length is equal to 320 ms. For example, in FIG. 6b, SI window length=periodicity of the SSB=SI periodicity=320 ms, $S_{MO}$=320, N=128, Nw=2, and indexes of SI messages corresponding to subwindows are sequentially 2 and 4. MOs in the subwindow 1 correspond to the MOs in the even-index SFN in the SI window length, and do not include MOs occupied by SSBs. The MOs in the subwindow 2 may correspond to the MOs in the odd-index SFN in the SI window length, and do not include the MOs corresponding to the first four slots in the odd-index SF. For a specific implementation in which the SI window is equal to 320 ms, refer to related descriptions of FIG. 6a. Details are not described again. The subwindow 1 does not include the MOs occupied by the SSBs, so that the UE can conveniently and quickly obtain, according to the foregoing formula (3), an index number of an MO at which the UE can perform blind detection on SIB19. Optionally, when a quantity of MOs included in the subwindow 1 may be different from a quantity of MOs included in the subwindow 2, the subwindow 2 may further include the MOs corresponding to the first four slots in the odd-index SF.

It may be understood that the division manners of the subwindow 2 shown in FIG. 6a and FIG. 6b are merely examples. For example, the subwindow 2 may further include the MOs occupied by the SSBs.

According to the method provided in embodiments of this application, the UE may monitor the SI2 message in the subwindow 1, monitor an SI4 message in the subwindow 2, and monitor different SI messages in different subwindows, thereby improving configuration flexibility and effectively improving monitoring efficiency.

Example 2

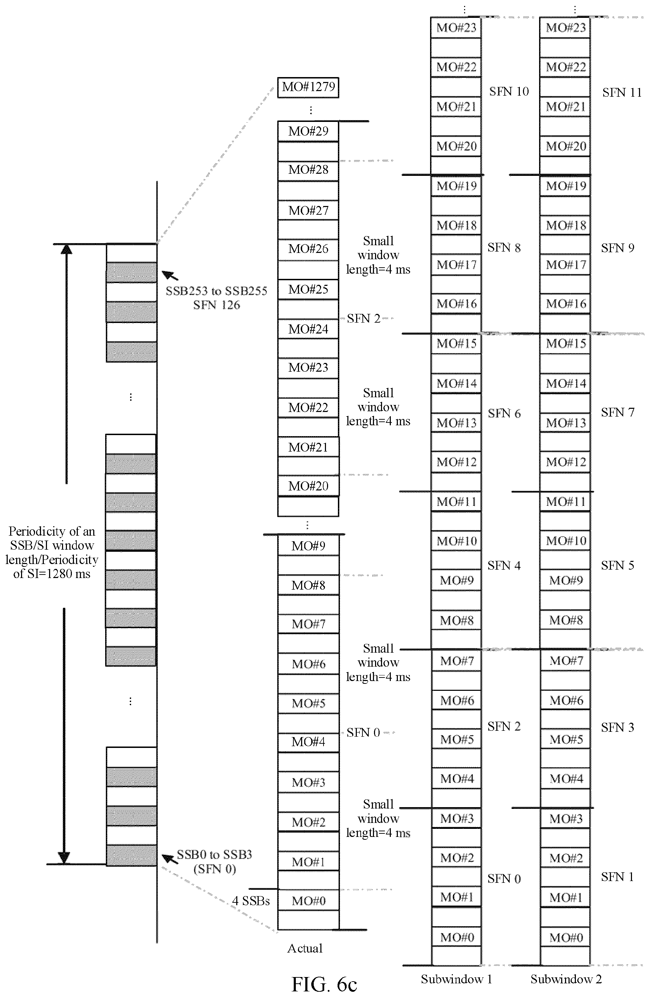

SI window length=periodicity of the SSB=SI periodicity=1280 ms, $S_{MO}$=1280, N=512, Nw=2 (which is merely an example), and indexes of SI messages corresponding to subwindows are sequentially 2 and 4. Each of the subwindow 1 and the subwindow 2 includes 256 MOs, that is, S=256, X=ceil(256/256)=1, and x=0. As shown in FIG. 6c, the MOs in the subwindow 1 correspond to a part of MOs in each even-index SF in the SI window other than MOs occupied by SSBs. In addition, indexes of the MOs in the subwindow 1 are sequentially arranged in ascending order. Alternatively, the subwindow 1 may be understood as that the MOs in the subwindow 1 correspond to first four MOs that are in each even-index SF in the SI window other than the MOs occupied by the SSBs. The part of MOs may be understood as a first small window length in the even-index SF shown in FIG. 6c. The MOs in the subwindow 2 correspond to a part of MOs in each odd-index SF in the SI window length, and indexes of the MOs in the subwindow 2 are sequentially arranged in ascending order. The MOs in the subwindow 2 may be understood as a first small window length (not shown in FIG. 6c) in the odd-index SF. Alternatively, the subwindow 2 may be understood as that the MOs in the subwindow 2 correspond to first four MOs in each odd-index SF in the SI window other than MOs corresponding to first two slots.

It may be understood that FIG. 6c is shown by using an example in which every two SNs include four SSBs, and the four SSBs separately correspond to a third slot to a tenth slot in the even-index SF. If the four SSBs separately correspond to an eleventh slot to an eighteenth slot in the even-index SF, the MOs in the subwindow 1 may correspond to a second small window length in each even-index SF, for example, the second small window length shown in FIG. 6c. The small window length shown in FIG. 6c may be understood as a group of MOs. The division manner of the subwindow 2 shown in FIG. 6c is merely an example, and should not be understood as a limitation on embodiments of this application.

According to the foregoing formula (3), for each subwindow, an index of an MO that is of the PDCCH of SIB19 and that corresponds to SSB#0 is MO#0. MO#0 in the subwindow 1 is equivalent to MO#1 in the SI window, and MO#0 in the subwindow 1 is included in the actual location at which the network device sends SIB19. An index of an MO that is of the PDCCH of SIB19 and that corresponds to SSB#8 is MO#8, MO#8 in the subwindow 1 is equivalent to MO#41 in the SI window, and MO#8 in the subwindow 1 is included in the actual location at which the network device sends SIB19. The UE may perform blind detection, from the subwindow 2, on an SIB (for example, SIB2 or SIB4) included in an SI message (for example, an SI4 message) corresponding to the subwindow 2.

According to the method provided in embodiments of this application, it is ensured that the UE can perform blind detection on SIB19 at a corresponding MO after obtaining the SSB, monitoring efficiency of the UE is improved, and blind detection resources are saved as much as possible.

Example 3

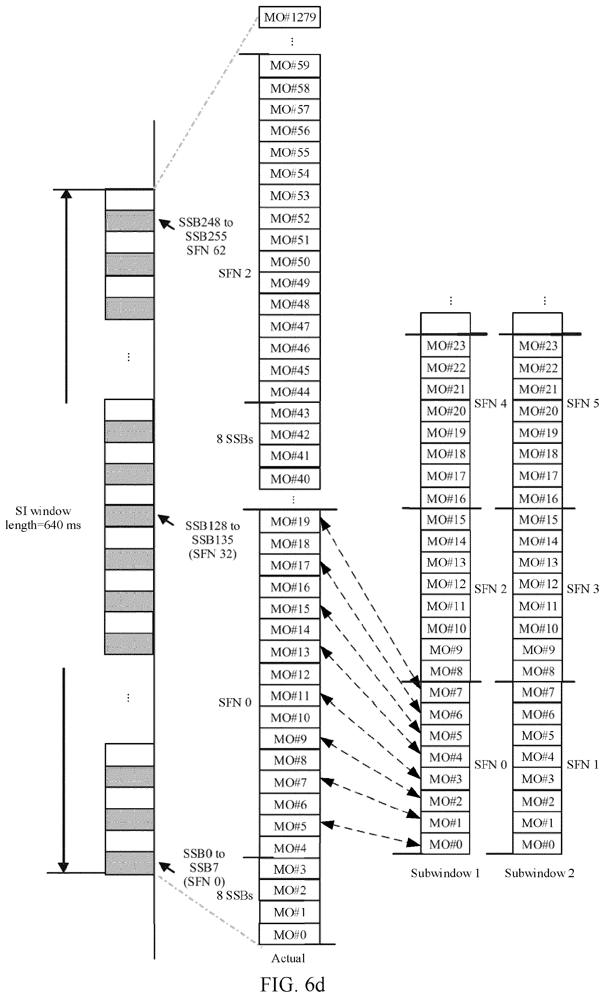

SI window length=periodicity of the SSB=SI periodicity=1280 ms, $S_{MO}$=640, N=256, Nw=2 (which is merely an example), and indexes of SI messages corresponding to subwindows are sequentially 2 and 4. Each of the subwindow 1 and the subwindow 2 includes 256 MOs, that is, S=256, X=ceil(256/256)=1, and x=0. As shown in FIG. 6d, the MOs in the subwindow 1 correspond to odd-index MOs in even-index SFs in the SI window, and do not include MOs occupied by SSBs. Indexes of the MOs in the subwindow 1 are sequentially arranged in ascending order. The MOs in the subwindow 2 correspond to odd-index MOs in odd-index SFs in the SI window, and do not include MOs corresponding to first four slots in the odd-index SFs (which is merely an example). Optionally, the MOs in the subwindow 2 may correspond to even-index MOs in the odd-index SFs in the SI window, and do not include MOs corresponding to first four slots in the odd-index SFs (which is merely an example). Optionally, the MOs in the subwindow 2 may correspond to even-index MOs in even-index SFs in the SI window, and do not include MOs occupied by SSBs. Optionally, the MOs in the subwindow 2 may correspond to even-index MOs in the even-index SFs in the SI window, and the even-index (or odd-index) MOs in the odd-index SFs in the SI window. Optionally, the MOs in the subwindow 2 may correspond to the even-index MOs in the even-index SFs in the SI window and the MOs in the odd-index SFs in the SI window. The indexes of the MOs in the subwindow 1 and the subwindow 2 are arranged in ascending order.

According to the foregoing formula (3), for each subwindow, an index of an MO that is of the PDCCH of SIB19 and that corresponds to SSB#0 is MO#0. MO#0 in the subwindow 1 is equivalent to MO#5 in the SI window, and MO#0 in the subwindow 1 is included in the actual location at which the network device sends SIB19. According to FIG. 6d, the UE can efficiently obtain SIB19 through monitoring in the SI message (for example, the SI2 message) corresponding to the subwindow 1, and obtain the SIB (for example, SIB2 or SIB4) through monitoring in the SI message (for example, the SI4 message) corresponding to the subwindow 2. It may be understood that for specific descriptions of FIG. 6d, refer to the foregoing descriptions. Details are not described herein again.

In embodiments of this application, the SI window is divided into the plurality of subwindows, so that blind detection of the plurality of SI messages can be implemented in one SI window. In addition, locations of the subwindows are flexibly configured, so that the MO of the PDCCH of the SI window can match the SSB pattern in the current NTN scenario, and the configuration manner is flexible. In this way, blind detection resources used when the UE performs blind detection on the SI message are saved, the ephemeris information in the SI message is accurately and efficiently obtained, initial access time is reduced, and user experience is improved.

The following describes a communication apparatus provided in an embodiment of this application.

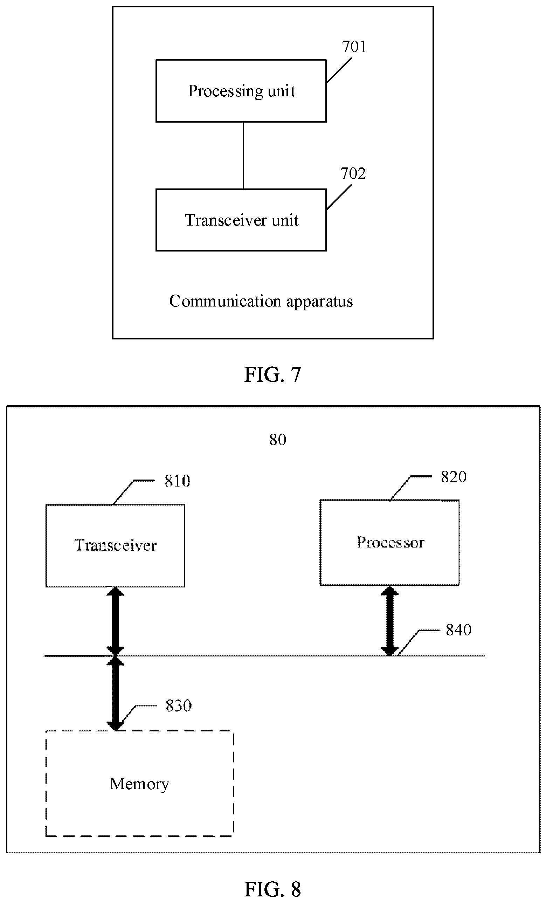

In this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of software functional module. It should be noted that the module division in this application is an example, and is merely logical function division. During actual implementation, there may be another division manner. The following describes in detail a communication apparatus in an embodiment of this application with reference to FIG. 7 to FIG. 9.

FIG. 7 is a diagram of a structure of a communication apparatus according to an embodiment of this application. As shown in FIG. 7, the communication apparatus includes a processing unit 701 and a transceiver unit 702.

In some embodiments of this application, the communication apparatus may be the UE, the terminal device, or the chip shown above, and the chip may be disposed in the terminal device or the UE. In other words, the communication apparatus may be configured to perform steps, functions, or the like performed by the UE in the foregoing method embodiments (including FIG. 4).

The transceiver unit 702 is configured to receive a broadcast message. The broadcast message includes indication information, the indication information indicates that one SI window includes Nw subwindows, and each of the Nw subwindows corresponds to one SI message. At least one of the Nw SI messages includes ephemeris information, and Nw is an integer greater than or equal to 2.

The processing unit 701 is configured to monitor the Nw SI messages based on the broadcast message.

In a possible implementation, an MO in each subwindow corresponds to a group of MOs in every M SFs in the SI window, and M is an integer greater than or equal to 2.

In a possible implementation, the every M SFs include a first group of MOs, and the first group of MOs meet at least one of the following conditions: MOs in the first group of MOs correspond to a same SF, and MOs in the first group of MOs correspond to at least two SFs.

In a possible implementation, the first group of MOs include an MO that is in an even-index SF and that corresponds to SIB 19.

In a possible implementation, MO indexes in each subwindow are determined by extracting a group of MOs from the every M SFs in the SI window and numbering the group of MOs in ascending order.

In a possible implementation, the transceiver unit 702 is further configured to receive an SSB. An index of the SSB is K, and an MO index i that is in the subwindow and that corresponds to the SSB satisfies the following condition:

$$i = x*N + K,$$

where
x=0, 1, ..., and X-1, X=ceil(S/N), S represents a total quantity of MOs in the subwindow, and N represents a total quantity of SSBs in the SI window.

In a possible implementation, a periodicity of the SSB is equal to a window length of the SI window.

In a possible implementation, a value of M is determined based on an SSB pattern.

In a possible implementation, the broadcast message further includes at least one piece of the following information: a time-frequency resource of the SI window, an index of the SI message corresponding to each of the Nw subwindows, and a system information block SIB corresponding to each SI message.

The foregoing specific descriptions of the transceiver unit and the processing unit are merely examples. For specific functions, steps, or the like performed by the transceiver unit and the processing unit, refer to the foregoing method embodiments. Details are not described herein again. For descriptions of the SI window, the subwindow, Nw, M, the first group of MOs, and the like, refer to the descriptions of the foregoing method embodiments. Details are not described herein again.

In some other embodiments of this application, the communication apparatus may be the network device or the chip shown above, and the chip may be disposed in the network device. In other words, the communication apparatus may be configured to perform steps, functions, or the like performed by the network device in the foregoing method embodiments (including FIG. 4).

The processing unit 701 is configured to determine Nw subwindows included in one system information SI window.

The transceiver unit 702 is configured to send a broadcast message. The broadcast message includes indication information, the indication information indicates that the SI window includes the Nw subwindows, and each of the Nw subwindows corresponds to one SI message. At least one of the Nw SI messages includes ephemeris information, and Nw is an integer greater than or equal to 2.

In a possible implementation, an MO in each subwindow corresponds to a group of MOs in every M system frames SF in the SI window, and M is an integer greater than or equal to 2.

In a possible implementation, the every M SFs include a first group of MOs, and the first group of MOs meet at least one of the following conditions: MOs in the first group of MOs are from a same SF, and MOs in the first group of MOs are from at least two SFs.

In a possible implementation, the first group of MOs include an MO that is in an even-index SF and that corresponds to SIB19.

In a possible implementation, MO indexes in each subwindow are determined by extracting a group of MOs from the every M SFs in the SI window and numbering the group of MOs in ascending order.

In a possible implementation, the transceiver unit 702 is further configured to send a synchronization signal block SSB. An index of the SSB is K, and an MO index i that is in the subwindow and that corresponds to the SSB satisfies the following condition:

$$i = x*N + K,$$

where

x=0, 1, ..., and X-1, X=ceil(S/N), S represents a total quantity of MOs in the subwindow, and N represents a total quantity of SSBs in the SI window.

In a possible implementation, a periodicity of the SSB is equal to a window length of the SI window.

In a possible implementation, a value of M is determined based on an SSB pattern.

In a possible implementation, the broadcast message further includes at least one piece of the following information: a time-frequency resource of the SI window, an index of the SI message corresponding to each of the Nw subwindows, and a system information block SIB corresponding to each SI message.

In a possible implementation, Nw is determined based on a total quantity of MOs in the SI window and the total quantity of synchronization signal blocks SSB in the SI window.

In a possible implementation, Nw is less than or equal to Nmax, and Nmax satisfies the following condition:

$$Nmax = \lfloor S_{MO}/N \rfloor,$$

where

$S_{MO}$ represents the total quantity of MOs in the SI window, and N represents the total quantity of synchronization signal blocks SSB in the SI window.

The foregoing specific descriptions of the transceiver unit and the processing unit are merely examples. For specific functions, steps, or the like performed by the transceiver unit and the processing unit, refer to the foregoing method embodiments. Details are not described herein again. For descriptions of the SI window, the subwindow, Nw, M, the first group of MOs, and the like, refer to the descriptions of the foregoing method embodiments. Details are not described herein again.

The foregoing describes the communication apparatus in embodiments of this application. The following describes a possible product form of the communication apparatus. It should be understood that any form of product that has a function of the communication apparatus in FIG. 7 falls within the protection scope of embodiments of this application. It should be further understood that the following description is merely an example, and a product form of the communication apparatus in embodiments of this application is not limited thereto.

In a possible implementation, in the communication apparatus shown in FIG. 7, the processing unit 701 may be one or more processors, and the transceiver unit 702 may be a transceiver; or the transceiver unit 702 may be a sending unit and a receiving unit, the sending unit may be a transmitter, the receiving unit may be a receiver, and the sending unit and the receiving unit are integrated into one device, for example, a transceiver. In this embodiment of this application, the processor and the transceiver may be coupled, or the like. A manner of connecting the processor and the transceiver is not limited in this embodiment of this application. In a process of performing the foregoing methods, an information sending process in the foregoing methods may be understood as a process in which the processor outputs the foregoing information. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing methods may be understood as a process of receiving input information by the processor. When the processor receives the input information, the transceiver receives the information, and inputs the information to the processor. Further, after the transceiver receives the foregoing information, other processing may need to be performed on the foregoing information before the information is input into the processor.

As shown in FIG. 8, the communication apparatus 80 includes one or more processors 820 and a transceiver 810.

In some embodiments of this application, the communication apparatus may be configured to perform steps, functions, or the like performed by the UE in the foregoing method embodiments.

The transceiver 810 is configured to receive a broadcast message. The broadcast message includes indication information, the indication information indicates that one SI window includes Nw subwindows, and each of the Nw subwindows corresponds to one SI message. At least one of the Nw SI messages includes ephemeris information, and Nw is an integer greater than or equal to 2.

The processor 820 is configured to monitor the Nw SI messages based on the broadcast message.

It may be understood that, after the transceiver 810 receives the broadcast message, the processor 820 may be configured to receive the input broadcast message, to monitor the Nw SI messages based on the broadcast message.

In a possible implementation, the transceiver 810 is further configured to receive an SSB.

It may be understood that, after the transceiver 810 receives the SSB, the processor 820 may be further configured to: receive the input SSB, and monitor the Nw SI messages based on the SSB and the broadcast message.

In some other embodiments of this application, the communication apparatus may be configured to perform steps, functions, or the like performed by the network device in the foregoing method embodiments.

The processor 820 is configured to determine Nw subwindows included in one system information SI window.

The transceiver 810 is configured to send a broadcast message. The broadcast message includes indication information, the indication information indicates that the SI window includes the Nw subwindows, and each of the Nw subwindows corresponds to one SI message. At least one of the Nw SI messages includes ephemeris information, and Nw is an integer greater than or equal to 2.

It may be understood that, after determining the Nw subwindows included in the SI window, the processor 820 may further output the broadcast message, so that the transceiver 810 sends the broadcast message.

In a possible implementation, the transceiver 810 is further configured to send an SSB.

It may be understood that, after generating the SSB, the processor 820 may further output the SSB, so that the transceiver 810 sends the SSB.

It may be understood that specific descriptions of the transceiver and the processor shown in embodiments of this application are merely examples. For specific functions, steps, or the like performed by the transceiver and the processor, refer to the foregoing method embodiments. Details are not described herein again.

In embodiments of this application, for descriptions of the SI window, the subwindow, Nw, M, the first group of MOs, and the like, refer to the descriptions of the foregoing method embodiments. Details are not described herein again.

In implementations of the communication apparatus shown in FIG. 8, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 80 may further include one or more memories 830, configured to store program instructions, data, and/or the like.

The memory 830 is coupled to the processor 820. The coupling in this embodiment of this application is an indirect coupling or a communication connection between apparatuses, units, or modules, and may be in an electrical, mechanical, or other form, and is used for information exchange between the apparatuses, units, or modules. The processor 820 may cooperate with the memory 830. The processor 820 may further execute the program instructions stored in the memory 830. Optionally, at least one of the one or more memories may be included in the processor.

In this embodiment of this application, a specific connection medium between the transceiver 810, the processor 820, and the memory 830 is not limited. In this embodiment of this application, the memory 830, the processor 820, and the transceiver 810 are connected by using a bus 840 in FIG. 8. The bus is represented by using a bold line in FIG. 8. A connection manner between other components is merely an example for description, and is not limited thereto. The bus may be classified into an address bus, a data bus, a control bus, and the like. For ease of representation, only one bold line is used to represent the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, may be performed by using a combination of hardware in the processor and a software module, or the like.

In embodiments of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any other medium that can carry or store program code in a form of instructions or a data structure and that can be read and/or written by a computer (for example, the communication apparatus shown in this application), but is not limited thereto. The memory in embodiments of this application may alternatively be a circuit or any other apparatus that can implement a storage function, and is configured to store program instructions and/or data.

For example, the processor 820 is mainly configured to: process a communication protocol and communication data, control the entire communication apparatus, execute a software program, and process data of the software program. The memory 830 is mainly configured to store the software program and data. The transceiver 810 may include a control circuit and an antenna. The control circuit is mainly configured to: perform conversion between a baseband signal and a radio frequency signal, and process the radio frequency signal. The antenna is mainly configured to receive and send a radio frequency signal in a form of electromagnetic wave. The input/output apparatus, such as a touchscreen, a display, or a keyboard, is mainly configured to: receive data input by a user and output data to the user.

After the communication apparatus is powered on, the processor 820 may read the software program in the memory 830, interpret and execute instructions of the software program, and process the data of the software program. When data needs to be sent in a wireless manner, the processor 820 performs baseband processing on to-be-sent data, and then outputs a baseband signal to a radio frequency circuit. The radio frequency circuit performs radio frequency processing on the baseband signal, and then sends the radio frequency signal in an electromagnetic wave form through the antenna. When data is to be sent to the communication apparatus, the radio frequency circuit receives a radio frequency signal through the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independently of a processor that performs baseband processing. For example, in a distributed scenario, the radio frequency circuit and the antenna may be remotely disposed independent of the communication apparatus.

It may be understood that the communication apparatus shown in this embodiment of this application may further have more components than those in FIG. 8. This is not limited in this embodiment of this application. The foregoing methods performed by the processor and the transceiver are merely examples. For specific steps performed by the processor and the transceiver, refer to the methods described above.

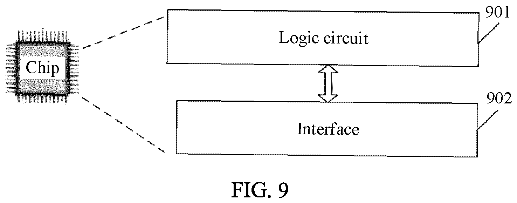

In another possible implementation, in the communication apparatus shown in FIG. 7, the processing unit 701 may be one or more logic circuits, and the transceiver unit 702 may be an input/output interface, or referred to as a communication interface, an interface circuit, an interface, or the like. Alternatively, the transceiver unit 702 may be a sending unit and a receiving unit. The sending unit may be an output interface, and the receiving unit may be an input interface. The sending unit and the receiving unit are integrated into one unit, for example, an input/output interface. As shown in FIG. 9, the communication apparatus shown in FIG. 9 includes a logic circuit 901 and an interface 902. In other words, the processing unit 701 may be implemented by using the logic circuit 901, and the transceiver unit 702 may be implemented by using the interface 902. The logic circuit 901 may be a chip, a processing circuit, an integrated circuit, a system-on-a-chip (system-on-a-chip, SoC), or the like. The interface 902 may be a communication interface, an input/output interface, a pin, or the like. For example, in FIG. 9, an example in which the communication apparatus is a chip is used. The chip includes a logic circuit 901 and an interface 902.

In this embodiment of this application, the logic circuit and the interface may be further coupled to each other. A specific connection manner of the logic circuit and the interface is not limited in this embodiment of this application.

In some embodiments of this application, the communication apparatus may be configured to perform steps, functions, or the like performed by the UE in the foregoing method embodiments.

The interface 902 is configured to input a broadcast message. The broadcast message includes indication information, the indication information indicates that one SI window includes Nw subwindows, and each of the Nw subwindows corresponds to one SI message. At least one of the Nw SI messages includes ephemeris information, and Nw is an integer greater than or equal to 2.

The logic circuit 901 is configured to monitor the Nw SI messages based on the broadcast message.

In a possible implementation, the interface 902 is further configured to input an SSB.

In some other embodiments of this application, the communication apparatus may be configured to perform steps, functions, or the like performed by the network device in the foregoing method embodiments.

The logic circuit 901 is configured to determine Nw subwindows included in one system information SI window.

The interface 902 is configured to output a broadcast message. The broadcast message includes indication information, the indication information indicates that the SI window includes the Nw subwindows, and each of the Nw subwindows corresponds to one SI message. At least one of the Nw SI messages includes ephemeris information, and Nw is an integer greater than or equal to 2.

In a possible implementation, the interface 902 is further configured to output an SSB.

In embodiments of this application, for descriptions of the SI window, the subwindow, Nw, M, the first group of MOs, and the like, refer to the descriptions of the foregoing method embodiments. Details are not described herein again.

It may be understood that specific descriptions of the logic circuit and the interface shown in embodiments of this application are merely examples. For specific functions, steps, or the like performed by the transceiver unit and the processing unit, refer to the foregoing method embodiments. Details are not described herein again.

It may be understood that the communication apparatus shown in embodiments of this application may implement the method provided in embodiments of this application in a form of hardware, or may implement the method provided in embodiments of this application in a form of software, or the like. This is not limited in embodiments of this application.

For specific implementations of the embodiments shown in FIG. 9, refer to the foregoing embodiments. Details are not described herein again.

An embodiment of this application further provides a wireless communication system. The wireless communication system includes a transmit end and a receive end. The transmit end and the receive end may be configured to perform the method in any one of the foregoing embodiments. Alternatively, for the transmit end and the receive end, refer to the communication apparatuses shown in FIG. 7 to FIG. 9.

In addition, this application further provides a computer program. The computer program is used to implement an operation and/or processing performed by the UE in the method provided in this application.

This application further provides a computer program. The computer program is used to implement an operation and/or processing performed by the network device in the method provided in this application.

This application further provides a computer-readable storage medium. The computer-readable storage medium stores computer code. When the computer code is run on a computer, the computer performs an operation and/or processing performed by the UE in the method provided in this application.

This application further provides a computer-readable storage medium. The computer-readable storage medium stores computer code. When the computer code is run on a computer, the computer performs an operation and/or processing performed by the network device in the method provided in this application.

This application further provides a computer program product. The computer program product includes computer code or a computer program. When the computer code or the computer program runs on a computer, an operation and/or processing performed by the UE in the method provided in this application is performed.

This application further provides a computer program product. The computer program product includes computer code or a computer program. When the computer code or the computer program runs on a computer, an operation and/or processing performed by the network device in the method provided in this application is performed.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one location, or may be distributed on a plurality of network units. Some or all of the units may be selected based on an actual requirement to implement technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, all or some of the technical solutions may be implemented in a form of software product. The computer software product is stored in a readable-storage medium, and includes several instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A satellite communication method, wherein the method comprises:

receiving a broadcast message, wherein the broadcast message comprises indication information, the indication information indicates that one system information SI window comprises Nw subwindows, each of the Nw subwindows corresponds to one SI message, at least one of the Nw SI messages comprises ephemeris information, and Nw is an integer greater than or equal to 2; and

monitoring the Nw SI messages based on the broadcast message.

2. The method according to claim 1, wherein a monitoring occasion MO in each subwindow corresponds to a group of MOs in every M system frames SF in the SI window, and M is an integer greater than or equal to 2.

3. The method according to claim 2, wherein the every M SFs comprise a first group of MOs, and the first group of MOs meet at least one of the following conditions: MOs in the first group of MOs correspond to a same SF, and MOs in the first group of MOs correspond to at least two SFs.

4. The method according to claim 3, wherein the first group of MOs comprise an MO that is in an even-index SF and that corresponds to SIB19.

5. The method according to any one of claims 1 to 4, wherein MO indexes in each subwindow are determined by extracting a group of MOs from the every M SFs in the SI window and numbering the group of MOs in ascending order.

6. The method according to any one of claims 1 to 5, wherein the method further comprises:

receiving a synchronization signal block SSB, wherein an index of the SSB is K, and an MO index i that is in the subwindow and that corresponds to the SSB satisfies the following condition:

$$i = x * N + K,$$

wherein
x=0, 1, ..., and X-1, X=ceil(S/N), S represents a total quantity of MOs in the subwindow, and N represents a total quantity of SSBs in the SI window.

7. The method according to claim 6, wherein a periodicity of the SSB is equal to a window length of the SI window.

8. The method according to any one of claims 2 to 7, wherein a value of M is determined based on an SSB pattern.

9. The method according to any one of claims 1 to 8, wherein the broadcast message further comprises at least one piece of the following information:
a time-frequency resource of the SI window, an index of the SI message corresponding to each of the Nw subwindows, and a system information block SIB corresponding to each SI message.

10. A satellite communication method, wherein the method comprises:

determining one system information SI window, wherein the IS window comprises Nw subwindows; and
sending a broadcast message, wherein the broadcast message comprises indication information, the indication information indicates that the SI window comprises the Nw subwindows, each of the Nw subwindows corresponds to one SI message, at least one of the Nw SI messages comprises ephemeris information, and Nw is an integer greater than or equal to 2.

11. The method according to claim 10, wherein a monitoring occasion MO in each subwindow corresponds to a group of MOs in every M system frames SF in the SI window, and M is an integer greater than or equal to 2.

12. The method according to claim 11, wherein the every M SFs comprise a first group of MOs, and the first group of MOs meet at least one of the following conditions: MOs in the first group of MOs correspond to a same SF, and MOs in the first group of MOs correspond to at least two SFs.

13. The method according to claim 12, wherein the first group of MOs comprise an MO that is in an even-index SF and that corresponds to SIB19.

14. The method according to any one of claims 10 to 13, wherein MO indexes in each subwindow are determined by extracting a group of MOs from the every M SFs in the SI window and numbering the group of MOs in ascending order.

15. The method according to any one of claims 10 to 14, wherein the method further comprises:

sending a synchronization signal block SSB, wherein an index of the SSB is K, and an MO index i that is in the subwindow and that corresponds to the SSB satisfies the following condition:

$$i = x*N+K,$$

wherein
x=0, 1, ..., and X-1, X=ceil(S/N), S represents a total quantity of MOs in the subwindow, and N represents a total quantity of SSBs in the SI window.

16. The method according to claim 15, wherein a periodicity of the SSB is equal to a window length of the SI window.

17. The method according to any one of claims 11 to 16, wherein a value of M is determined based on an SSB pattern.

18. The method according to any one of claims 10 to 17, wherein the broadcast message further comprises at least one piece of the following information:
a time-frequency resource of the SI window, an index of the SI message corresponding to each of the Nw subwindows, and a system information block SIB corresponding to each SI message.

19. The method according to any one of claims 10 to 18, wherein Nw is determined based on a total quantity of MOs in the SI window and the total quantity of synchronization signal blocks SSB in the SI window.

20. The method according to any one of claims 10 to 19, wherein Nw is less than or equal to Nmax, and Nmax satisfies the following condition:

$$Nmax = \lfloor S_{MO}/N \rfloor,$$

wherein
$S_{MO}$ represents the total quantity of MOs in the SI window, and N represents the total quantity of synchronization signal blocks SSB in the SI window.

21. A communication apparatus, comprising a unit configured to perform the method according to any one of claims 1 to 20.

22. A communication apparatus, comprising a processor and a memory, wherein

the processor is configured to store a computer program; and
the processor is configured to execute the computer program, to enable the method according to any one of claims 1 to 20 to be performed.

23. A communication apparatus, comprising a logic circuit and an interface, wherein the logic circuit is coupled to the interface, the interface is configured to input and/or output information, and the logic circuit is configured to perform the method according to any one of claims 1 to 20.

24. A computer-readable storage medium, wherein the computer-readable storage medium is configured to store a computer program, and when the computer program is executed, the method according to any one of claims 1 to 20 is performed.

25. A communication system, wherein the communication system comprises a terminal device and a network device, the terminal device is configured to perform the method according to any one of claims 1 to 9, and the network device is configured to perform the method according to any one of claims 10 to 20.

FIG. 1

Air interface — Air interface — NG

Terminal device — Satellite — Terrestrial station — Base station — Core network — Data network

FIG. 2a

Air interface — NG — NG

Terminal device — Satellite — Terrestrial station — Core network — Data network

FIG. 2b

Air interface — NG — NG

Terminal device — Satellite — Terrestrial station — Core network — Data network

Xn interface

Air interface

Satellite

Terminal device

FIG. 2c

EP 4 572 379 A1

FIG. 3a

EP 4 572 379 A1

FIG. 3b

FIG. 3c

```
┌─────────────────────┐                          ┌─────────────────────┐
│   Network device    │                          │         UE          │
└─────────────────────┘                          └─────────────────────┘
           │                                                 │
           │   Broadcast message, where the broadcast        │
           │       message includes indication               │
           │    information, the indication information       │
           │    indicates that one SI window includes         │
           │       Nw subwindows, each subwindow              │
           │    corresponds to one SI message, and at         │
           │ least one of the Nw SI messages includes  401    │
           │         ephemeris information          ╱         │
           │─────────────────────────────────────────────────▶│
           │                                      402          │
           │                 SSB                 ╱             │
           │─────────────────────────────────────────────────▶│
           │                                                 │
           │                         ┌───────────────────────────────────┐ 403
           │                         │  Monitor the Nw SI messages based on the ╱
           │                         │         broadcast message         │
           │                         └───────────────────────────────────┘
           │                                                 │
           │                                                 │
```

FIG. 4

29

FIG. 5a

FIG. 5b

FIG. 6a

Subwindow 1    Subwindow 2

FIG. 6b

FIG. 6c

MO#1279

⋮

MO#59
MO#58
MO#57
MO#56
MO#55
MO#54
MO#53
MO#52
MO#51
MO#50
MO#49
MO#48
MO#47
MO#46
MO#45
MO#44
MO#43
MO#42
MO#41
MO#40

⋮

MO#19
MO#18
MO#17
MO#16
MO#15
MO#14
MO#13
MO#12
MO#11
MO#10
MO#9
MO#8
MO#7
MO#6
MO#5
MO#4
MO#3
MO#2
MO#1
MO#0

SSB248 to
SSB255
SFN 62

SFN 2

8 SSBs

SSB128 to
SSB135
(SFN 32)

SFN 0

SSB0 to
SSB7
(SFN 0)
8 SSBs

Actual

SI window
length=640 ms

⋮

⋮

⋮

MO#23
MO#22
MO#21
MO#20
MO#19
MO#18
MO#17
MO#16
MO#15
MO#14
MO#13
MO#12
MO#11
MO#10
MO#9
MO#8
MO#7
MO#6
MO#5
MO#4
MO#3
MO#2
MO#1
MO#0

SFN 4

SFN 2

SFN 0

⋮

MO#23
MO#22
MO#21
MO#20
MO#19
MO#18
MO#17
MO#16
MO#15
MO#14
MO#13
MO#12
MO#11
MO#10
MO#9
MO#8
MO#7
MO#6
MO#5
MO#4
MO#3
MO#2
MO#1
MO#0

SFN 5

SFN 3

SFN 1

Subwindow 1     Subwindow 2

FIG. 6d

FIG. 7

FIG. 8

FIG. 9

# EP 4 572 379 A1

## INTERNATIONAL SEARCH REPORT

| International application No. |
|---|
| **PCT/CN2023/107929** |

| A. | CLASSIFICATION OF SUBJECT MATTER |
|---|---|

H04W 24/08(2009.01)i

According to International Patent Classification (IPC) or to both national classification and IPC

| B. | FIELDS SEARCHED |
|---|---|

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 窗口, 系统信息, 星历, 子窗口, 卫星, 广播, system information, window, satellite, ephemeris, broadcast

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112787712 A (THE 7TH RESEARCH INSTITUTE OF CHINA ELECTRONICS TECHNOLOGY GROUP CORP. et al.) 11 May 2021 (2021-05-11) entire document | 1-25 |
| A | CN 113038618 A (GALAXYSPACE (BEIJING) NETWORK TECHNOLOGY CO., LTD.) 25 June 2021 (2021-06-25) entire document | 1-25 |
| A | CN 111182658 A (HUAWEI TECHNOLOGIES CO., LTD.) 19 May 2020 (2020-05-19) entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2023** | **13 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

38

**INTERNATIONAL SEARCH REPORT**
Information on patent family members

International application No.

**PCT/CN2023/107929**

| Patent document cited in search report | | | Publication date (day/month/year) | Patent family member(s) | | | Publication date (day/month/year) |
|---|---|---|---|---|---|---|---|
| CN | 112787712 | A | 11 May 2021 | None | | | |
| CN | 113038618 | A | 25 June 2021 | None | | | |
| CN | 111182658 | A | 19 May 2020 | WO | 2020098627 | A1 | 22 May 2020 |
| | | | | US | 2021410198 | A1 | 30 December 2021 |
| | | | | EP | 3869906 | A1 | 25 August 2021 |
| | | | | EP | 3869906 | A4 | 05 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211054429X